(19) Europäisches Patentamt / European Patent Office / Office européen des brevets

(11) **EP 4 181 582 A1**

(12) **EUROPEAN PATENT APPLICATION**
published in accordance with Art. 153(4) EPC

(43) Date of publication:
**17.05.2023 Bulletin 2023/20**

(21) Application number: **21851273.9**

(22) Date of filing: **02.08.2021**

(51) International Patent Classification (IPC):
**H04W 52/02** $^{(2009.01)}$

(52) Cooperative Patent Classification (CPC):
**H04W 52/02;** Y02D 30/70

(86) International application number:
**PCT/CN2021/110090**

(87) International publication number:
**WO 2022/022742 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.07.2020 CN 202010761727
07.08.2020 CN 202010791001**

(71) Applicant: **Huawei Technologies Co., Ltd.
Shenzhen, Guangdong 518129 (CN)**

(72) Inventors:
• XUE, Yifan
  Shenzhen, Guangdong 518129 (CN)
• XUE, Lixia
  Shenzhen, Guangdong 518129 (CN)

(74) Representative: **Roth, Sebastian
Mitscherlich PartmbB
Patent- und Rechtsanwälte
Sonnenstraße 33
80331 München (DE)**

(54) **PAGING METHOD AND APPARATUS**

(57) This specification discloses a paging method and an apparatus, to resolve a problem that energy consumption of a terminal is high when the terminal is paged. The method may include: A terminal receives, before a paging occasion of the terminal, a first paging indication sent by a network device, where the first paging indication includes a first field, the first field is used to indicate whether paging is sent on R paging occasions, the R paging occasions include the paging occasion of the terminal, and R is an integer greater than or equal to 1. The terminal determines, based on a first paging occasion, whether to monitor DCI on the paging occasion of the terminal. The solutions of this application may be widely applied to the fields of communication technologies, artificial intelligence, internet of vehicles, internet of smart home, and the like.

FIG. 6

**Description**

This application claims priority to Chinese Patent Application No. 202010761727.7, filed with the China National Intellectual Property Administration on July 31, 2020 and entitled "METHOD FOR DESIGNING DCI OF PAGING INDICATION", and priority to Chinese Patent Application No. 202010791001.8, filed with the China National Intellectual Property Administration on August 7, 2020 and entitled "PAGING METHOD AND APPARATUS", which are incorporated herein by reference in their entireties.

**TECHNICAL FIELD**

Embodiments of this application relate to the field of communication technologies, and in particular, to a paging method and an apparatus.

**BACKGROUND**

When a terminal is in an idle (idle) state or an inactive (inactive) state, the terminal cyclically receives paging (paging) initiated by a network side. For example, the terminal obtains a paging frame (paging frame) and a paging occasion (paging occasion) in the PF through calculation, and monitors, on the PO, downlink control information (downlink control information, DCI) used to schedule a paging message. If the DCI is monitored and the monitored DCI schedules a physical downlink shared channel (physical downlink shared channel, PDSCH) carrying the paging message, the terminal receives, at a location indicated by the DCI, the PDSCH carrying the paging message, and determines, based on the paging message carried on the PDSCH, whether the terminal is paged.

Before the terminal monitors the DCI on the PO, the terminal needs to receive one or more synchronization signal blocks (synchronization signal blocks, SSBs) sent by the network side, and perform time/frequency synchronization, automatic gain control (automatic gain control, AGC) adjustment, and the like by using the SSB, to correctly receive the DCI. To be specific, before monitoring the DCI, the terminal needs to consume energy to receive the one or more SSBs. Between after receiving of the SSB and the PO, or between two SSBs, although the terminal does not need to receive a signal, to prepare for communication, the terminal needs to maintain a working state, and energy consumption is caused.

In a phase of researching energy saving of a terminal, how to reduce energy consumption of the terminal in a process of paging the terminal becomes a problem that needs to be urgently resolved.

**SUMMARY**

Embodiments of this application provide a paging method and an apparatus, to resolve a problem that energy consumption of a terminal is high when the terminal is paged.

To achieve the foregoing objective, the following technical solutions are used in embodiments of this application.

According to a first aspect, this application provides a paging method. The method includes: A terminal receives, before a paging occasion of the terminal, a first paging indication that includes a first field and that is sent by a network device, where the first field is used to indicate whether paging is sent on R paging occasions that include the paging occasion of the terminal. The terminal determines, based on a first paging occasion, whether to monitor, on the paging occasion of the terminal, DCI that is used to schedule a paging message.

Based on the method according to the first aspect, the paging indication may be preset before the paging occasion, and whether there is paging on the paging occasion is indicated to the terminal in advance by using the paging indication, so that when there is no paging on the paging occasion, the terminal is triggered to stop working in advance and enter a sleep state, to reduce energy consumption of the terminal. In addition, in the method according to the first aspect, one paging indication may be used to indicate a plurality of paging occasions, to indicate whether there is paging on the plurality of paging occasions at a time, so as to reduce signaling overheads.

In a possible design, the first field includes R pieces of indication information, an $i^{th}$ piece of indication information of the R pieces of indication information indicates whether paging is sent on an $i^{th}$ paging occasion of the R paging occasions, and i is an integer greater than or equal to 1 and less than or equal to R. Based on the possible design, indication information that is in a one-to-one correspondence with the paging occasion may be designed in the paging indication, so that the terminal can well distinguish, from a plurality of pieces of indication information, indication information corresponding to the paging occasion of the terminal, to simplify a system design.

In a possible design, that the terminal determines, based on a first paging occasion, whether to monitor downlink control information DCI on the paging occasion of the terminal includes: The terminal determines, based on a time domain location of the paging occasion of the terminal in the R paging occasions, indication information corresponding to the paging occasion of the terminal, and determines, based on the indication information corresponding to the paging occasion of the terminal, whether to monitor the DCI on the paging occasion of the terminal. Based on the possible design, the terminal may find, based on time domain locations of a plurality of paging occasions corresponding to the paging indication, the indication information corresponding to the paging occasion of the terminal, and determine, based on the paging indication corresponding to the paging occasion of the terminal, whether to continue to monitor the DCI, to improve accuracy of pre-obtaining, by the terminal, whether there is a paging message on the paging occasion of the terminal, and simplify the system design.

In a possible design, that a terminal receives, before a paging occasion of the terminal, a first paging indication that is sent by a network device includes: The terminal determines, based on the time domain location of the paging occasion of the terminal, K paging indications corresponding to the paging occasion of the terminal, where K is an integer greater than or equal to 1. The terminal receives the K paging indications before the paging occasion, and determines the first paging indication from the K paging indications. Based on the possible design, one paging occasion may be set to correspond to a plurality of paging indications. The plurality of paging indications are designed, to ensure to the maximum that the terminal can receive a paging indication that belongs to the paging occasion of the terminal, and can learn in advance whether there is paging on the paging occasion, so as to reduce energy consumption.

In a possible design, K is configured by the network device for the terminal. To be specific, the network device uniformly manages a quantity of paging indications corresponding to a paging occasion, so that configurations of terminals are unified, management is facilitated, and flexibility of configuration by the network device is improved.

In a possible design, that a terminal receives, before a paging occasion of the terminal, a first paging indication that is sent by a network device includes: The terminal receives, in a monitoring time interval, the first paging indication sent by the network device. The monitoring time interval is designed to receive the paging indication, so as to simplify the system design.

In a possible design, the terminal receives monitoring time window configuration information that is sent by the network device and that is used to determine the monitoring time interval, and determines the monitoring time interval based on the monitoring time window configuration information. To be specific, the network device configures the monitoring time interval, so that configurations of terminals are unified, management is facilitated, and flexibility of configuration by the network device is improved.

In a possible design, the R paging occasions are R paging occasions that are after the first paging indication and that are closest to the first paging indication. In this way, a time domain location of the paging indication can be close to a time domain location of the paging occasion, and a time interval between the paging occasion and the paging indication is shortened, to avoid a problem that excessive energy consumption is caused when the terminal monitors the DCI on the paging occasion only within a long period of time after receiving the paging indication when there is paging on the paging occasion or the paging indication.

In a possible design, R is configured by the network device for the terminal. To be specific, the network device configures a value of R, so that configurations of terminals are unified, management is facilitated, and flexibility of configuration by the network device is improved.

In a possible design, the first field includes indication information corresponding to each of the R paging occasions, the indication information corresponding to each of the R paging occasions includes M quantities of bits, the M quantities of bits are used to indicate whether there is paging on a paging occasion corresponding to the indication information, and M is an integer greater than or equal to 1. Based on the possible design, the indication information indicating the paging occasion may include a plurality of bits, that is, the paging occasions are grouped, to reduce a false alarm probability of the terminal and increase a probability of successfully paging the terminal.

In a possible design, M is configured by the network device for the terminal; or M meets a formula: M= $\left\lfloor (A-B)/\text{R} \right\rfloor$, where A is a length of a paging indication, and B is a length of a field that is in the paging indication other than the first field and that indicates valid information. Based on the possible design, a quantity of bits of blank padding (padding) in the paging indication may be as small as possible, a quantity of bits of the valid information may be as large as possible, and a quantity M of paging occasions to be further grouped may be as large as possible, to reduce a false alarm probability of paging the terminal, and increase a probability of successfully paging the terminal.

In a possible design, the first field includes indication information corresponding to each of the R paging occasions, indication information corresponding to $(A-B)-\left\lfloor (A-B)/\text{R} \right\rfloor \cdot R$ of the R paging occasions includes $\left\lceil (A-B)/\text{R} \right\rceil$ bits, indication information corresponding to each of remaining paging occasions of the R paging occasions includes $\left\lfloor (A-B)/\text{R} \right\rfloor$ bits, A is a length of a paging indication, and B is a length of a field that is in the paging indication other than the first field and that indicates valid information. Based on the possible design, existence of a padding bit can be fully avoided, a quantity of bits of the valid information may be as large as possible, and a quantity M of paging occasions to be further grouped may be as large as possible, to reduce a false alarm probability of paging the terminal, and increase a probability of successfully paging the terminal.

In a possible design, the paging indication further includes one or more of the following fields: a second field, a third field, and a fourth field. The second field is used to indicate whether the paging indication includes an SM, the third field is used to indicate an SM, and the fourth field is used to indicate availability of an auxiliary reference signal. The auxiliary reference signal is an auxiliary reference signal configured by the network device or an auxiliary reference signal associated with the R paging occasions. Based on the possible design, some fields used to indicate useful information may be set in the paging indication in advance, so that the terminal can learn the useful information in advance, to avoid energy consumption caused when the terminal needs to obtain the useful information from the DCI or other information after presynchronization.

In a possible design, the second field is common information of the R paging occasions. Based on the possible design, the second field may be set as common information of a plurality of paging occasions, to reduce overheads.

In a possible design, the SM indicates one or more of the following information: system information change indication information, earthquake and tsunami warning information, commercial mobile alert information, and indication information indicating to stop monitoring a paging message. Based on this, a large amount of useful information may be carried in the SM as much as possible, to improve a usage range of the information indicated by the SM.

In a possible design, a length of the third field is configured by the network device. Based on the possible design, the network device may configure the length of the third field, to improve flexibility of configuration and management and control right of the network device.

In a possible design, the third field is common information of the R paging occasions. Based on the possible design, the third field may be set as common information of a plurality of paging occasions, to reduce overheads.

In a possible design, that the fourth field is used to indicate availability of an auxiliary reference signal includes: A length of the fourth field is equal to a quantity of auxiliary reference signals or auxiliary reference signal groups configured by the network device, where the auxiliary reference signal group includes one or more auxiliary reference signals; or a length of the fourth field is equal to a quantity of auxiliary reference signals or auxiliary reference signal groups associated with the R paging occasions; or the fourth field includes R subfields, the R subfields correspond to the R paging occasions, and one subfield is used to indicate availability of an auxiliary reference signal associated with a paging occasion corresponding to the subfield. Based on the possible design, the fourth field may be used to indicate the availability of the auxiliary reference signal or the auxiliary reference signal group. The indication manner is flexible and diversified and is wide in applicability.

In a possible design, the first paging indication further includes a fifth field. The fifth field is used to indicate a quantity of paging occasions indicated by the first field. Alternatively, the fifth field is used to indicate a length of the first field. In this way, the quantity of the paging indications indicated by the first field or the length of the first field can be adjusted more flexibly.

In a possible design, content indicated by first fields in different paging indications for a same paging occasion is the same, to avoid that indication information that is received by the terminal and that corresponds to the paging occasion may be inconsistent, and consequently, the terminal cannot achieve an objective of saving energy by using the paging indication.

In a possible design, there is a QCL relationship between the first paging indication and a synchronization signal block SSB closest to the first paging indication, or there is a QCL relationship between the first paging indication and an SSB associated with the first paging indication, so that the terminal receives the paging indication based on a receive beam of the SSB, to improve accuracy of receiving the paging indication by the terminal.

According to a second aspect, this application provides a communication apparatus. The communication apparatus may be a terminal, or a chip or a system-on-a-chip in a terminal, or may be a function module that is in a terminal and that is configured to implement the method according to the first aspect or any one of the possible designs of the first aspect. The communication apparatus may implement a function performed by the terminal in the foregoing aspect or the possible designs, and the function may be implemented by hardware executing corresponding software. The hardware or the software includes one or more modules corresponding to the foregoing function. For example, the communication apparatus may include a receiving unit and a processing unit.

The receiving unit is configured to receive, before a paging occasion of a terminal, a first paging indication that includes a first field and that is sent by a network device. The first field is used to indicate whether paging is sent on R paging occasions that include the paging occasion of the terminal.

The processing unit is configured to determine, based on a first paging occasion, whether to monitor, on the paging occasion of the terminal, DCI that is used to schedule a paging message.

Specifically, for related execution actions of the receiving unit and the processing unit, refer to the description in the first aspect or any one of the possible designs of the first aspect. Details are not described again.

According to a third aspect, a communication apparatus is provided. The communication apparatus may be a terminal, or a chip or a system-on-a-chip in a terminal. The communication apparatus may implement a function performed by the terminal in the foregoing aspect or the possible designs, and the function may be implemented by hardware. In a possible design, the communication apparatus may include a processor and a communication interface. The processor may be configured to support the communication apparatus in implementing a function in the foregoing first aspect or any one of the possible designs of the first aspect. For example, the processor is configured to: receive, through the communication interface before a paging occasion of a terminal, a first paging indication that includes a first field and that is sent by a network device, where the first field is used to indicate whether paging is sent on R paging occasions that include the paging occasion of the terminal; and determine, based on a first paging occasion, whether to monitor, on the paging occasion of the terminal, DCI that is used to schedule a paging message. In another possible design, the communication apparatus may further include a memory. The memory is configured to store computer-executable instructions and data that are necessary for the communication apparatus. When the communication apparatus runs, the processor executes the computer-executable instructions stored in the memory, so that the communication apparatus performs the paging method according to the foregoing first aspect or any one of the possible designs of the first aspect.

According to a fourth aspect, a computer-readable storage medium is provided. The computer-readable storage medium may be a readable non-volatile storage medium. The computer-readable storage medium stores instructions. When the instructions are run on a computer, the computer is enabled to perform the paging method according to the foregoing first aspect or any one of the possible designs of the foregoing aspect.

According to a fifth aspect, a computer program product including instructions is provided. When the computer program product runs on a computer, the computer is enabled to perform the paging method according to the foregoing first aspect or any one of the possible designs of the foregoing aspect.

According to a sixth aspect, a communication apparatus is provided. The communication apparatus may be a terminal, or a chip or a system-on-a-chip in a terminal. The communication apparatus includes one or more processors and one or more memories. The one or more memories are coupled to the one or more processors, the one or more memories are configured to store computer program code, and the computer program code includes computer instructions. When the one or more processors execute the computer instructions, the terminal is enabled to perform the paging method according to the first aspect or any one of the possible designs of the first aspect.

For technical effects achieved by any one of the designs of the third aspect to the sixth aspect, refer to the technical effects achieved by the foregoing first aspect or any one of the possible designs of the first aspect. Details are not described again.

According to a seventh aspect, an embodiment of this application provides a communication system. The communication system may include the communication apparatus, the system-on-a-chip, or the network device according to any one of the second aspect or the sixth aspect.

## BRIEF DESCRIPTION OF DRAWINGS

FIG. 1a is a schematic diagram of a relationship between a PF and a PO;
FIG. 1b is a schematic diagram of a time domain location relationship between one PO and an SSB;
FIG. 1c is a schematic diagram of a time domain location relationship between a plurality of POs and an SSB;
FIG. 1d is a schematic diagram of monitoring an SSB and a PO by different terminals;
FIG. 1e is a schematic diagram of a relationship between whether being paged is indicated in advance and energy consumption;
FIG. 1f is a schematic diagram of a relationship between a location of a paging indication and energy consumption;
FIG. 1g is a schematic diagram of a relationship between an SSB in an SSB cycle and an MO in a PO;
FIG. 2 is a schematic diagram of a field included in a paging indication;
FIG. 3a is a schematic diagram of a mapping relationship between a paging occasion and a paging indication according to an embodiment of this application;
FIG. 3b is a schematic diagram of another mapping relationship between a paging occasion and a paging indication according to an embodiment of this application;
FIG. 3c is a schematic diagram of still another mapping relationship between a paging occasion and a paging indication according to an embodiment of this application;
FIG. 4 is an architectural diagram of a communication system according to this application;
FIG. 5 is a structural diagram of a communication apparatus according to an embodiment of this application;
FIG. 6 is a flowchart of a paging method according to an embodiment of this application;
FIG. 7 is a schematic composition diagram of a communication apparatus 70 according to an embodiment of this application; and
FIG. 8 is a schematic composition diagram of a communication system according to an embodiment of this application.

## DESCRIPTION OF EMBODIMENTS

Before embodiments of this application are described, some terms (such as paging, PO, and DCI) in embodiments of this application are explained and described. It should be noted that the following explanations and descriptions are intended to make embodiments of this application more easily understood, and should not be construed as a limitation on the protection scope claimed in embodiments of this application.

Paging (paging) is a process in which a network side device cyclically sends a paging message to a terminal in an idle (idle) state or an inactive (inactive) state, to wake up the terminal in the idle state or the inactive state to return to a connected (connected) state. One paging process may include: On a network side, the network side device (for example, an access network device) obtains a paging occasion (paging occasion, PO) corresponding to a terminal through calculation, and sends, to the terminal on the PO of the terminal, a physical downlink control channel (physical downlink control channel, PDCCH) carrying DCI. The DCI may be used to indicate whether the DCI schedules a PDSCH carrying a paging message (paging message). If the DCI indicates that the PDSCH carrying the paging message is scheduled, the network side device sends, at a resource location indicated by the DCI, the PDSCH carrying the paging message. On a terminal side, the terminal obtains the PO corresponding to the terminal through calculation, and monitors the DCI on the PO obtained through calculation by using a paging-radio network temporary identifier (paging-radio network temporary identity, P-RNTI) of the terminal. If the DCI is monitored and the DCI indicates that the PDSCH carrying the paging message is scheduled, the terminal receives, at the resource location indicated by the DCI, the PDSCH carrying the paging message, and determines, based on the paging message carried by the PDSCH, whether the terminal is paged. For example, the paging message may carry identification information of a paged device (for example, a user equipment identifier (user equipment identifier, UE_ID) of a terminal). If the paging message received by the terminal carries the identification information of the terminal, the terminal determines that the terminal is paged. If the paging message received by the terminal does not carry the identification information of the terminal, the terminal determines that the terminal is not paged. If the terminal is paged, the terminal initiates a random access procedure, and switches to the connected (connected) state.

PO is a time domain location/time interval in which a terminal monitors DCI that schedules a PDSCH carrying a paging message. When a location of a PO is determined, a location of one paging frame (paging frame, PF) needs to be first determined, and then a final location of the PO is determined based on a relative location of the PO in the PF. One PF may be associated with one or more POs, and POs in one PF are consecutively arranged starting from a start location of the PF. For example, a start location of a first PO in the PF is the same as a start location of the PF, and a start location of a second PO overlaps an end location of the first PO. By analogy, a plurality of POs are set. A length of one PO may be several timeslots (slots). Specifically, based on a user equipment identifier (user equipment identifier, UE_ID) of a terminal, a system frame number (system frame number, SFN) of a PF may be obtained through calculation by using the following formula (1), and a sequence number i_s of a PO that needs to be monitored by the terminal may be obtained through calculation by using the following formula (2):

$$(\text{SFN}+\text{PF\_offset}) \bmod \text{T}=(\text{T div N})*(\text{UE\_ID} \bmod \text{N}) \qquad\qquad \text{formula (1)}$$

$$\text{i\_s}=\text{floor}(\text{UE\_ID/N}) \bmod \text{Ns} \qquad\qquad \text{formula (2)}.$$

PF_offset in the foregoing formula is used to determine an offset value of the PF. PF_offset may be specified in a protocol in advance, or may be determined by an access network device and configured for the terminal. T is a discontinuous reception (discontinuous reception, DRX) cycle, N is a quantity of PFs in a DRX cycle T, and Ns is a quantity of POs in one PF. "mod" represents a remainder obtained after a division operation is performed on two numbers before and after mod. floor() represents rounding down to the nearest integer * represents a multiplication operation. div represents a division operation. (SFN+PF_offset) mod T=(T div N)*(UE_ID mod N) represents that all terminals are divided into N groups based on UE_ID. A value of UE_ID mod N can be used to determine a group in which the terminal is located and a PF to which the terminal corresponds. For example, N=4 is used as an example. If UE_ID is a string of binary digits, values of the last two bits of the UE_ID determine a PF in which the terminal is finally located. floor(UE_ID/N) mod Ns is equivalent to that the PFs of the terminal are further divided into Ns groups. A value of floor(UE_ID/N) mod Ns can be used to determine a specific group to which the terminal corresponds, namely, a specific PO. A value of the UE_ID is a 5G-S temporary mobile subscriber identity (5G S-temporary mobile subscriber identity, 5G-S-TMSI) mod 1024 of the terminal.

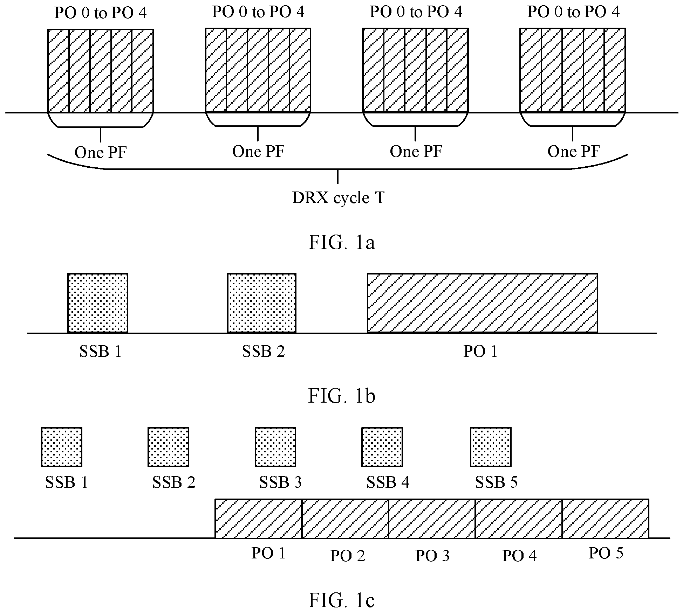

In general, there are N*Ns POs in one DRX cycle. Terminals are divided into N*Ns groups based on UE_IDs, and each group corresponds to a PO. For example, FIG. 1a is a schematic diagram in which N=4 and Ns=5. As shown in FIG. 1a, there are four PFs, and there are five POs in one PF. The terminal may obtain, through calculation according to the foregoing formula (1) and formula (2), that the terminal monitors DCI on a specific PO of a specific PF.

Further, to match beam-based (beam) transmission in an NR system design, a PO may be further divided into a plurality of monitoring occasions (monitoring occasions, MOs), and different MOs are associated with different SSBs, that is, associated with different beam directions. A quantity of MOs included in one PO is determined based on a quantity of SSBs actually sent in one SSB cycle, and the quantity of SSBs actually sent in one SSB cycle is configured by a network device by using system information.

It should be noted that in this application, the DRX cycle T, the quantity N of the PFs in the DRX cycle, and the quantity Ns of the POs in one PF may be dynamically set based on a requirement or may be pre-specified in a protocol. This is not limited.

DCI may be used to indicate whether to send a paging message and used to schedule a PDSCH carrying a paging message. In this application, the DCI may be alternatively referred to as paging DCI, scheduling information, another name, or the like. This is not limited. The DCI may include a plurality of fields. A location of each field in the DCI, a quantity of bits occupied by each field, and a meaning indicated by a value of each field may be pre-specified in a protocol or determined based on a configuration of a network device. The fields included in the DCI are described below.

(1) Short message indicator (short message indicator, SMI) field

The SMI field occupies 2 bits (bits). A first bit is used to indicate whether current DCI carries a short message (short message, SM), and a second bit is used to indicate whether the current DCI schedules a PDSCH carrying a paging message

(2) Short message (short message, SMI) field

The SMI field occupies 8 bits. A first bit indicates a system information change (system information change, SI change), a second bit indicates an earthquake and tsunami warning system (earthquake and tsunami warning system, ETWS) and/or a commercial mobile alert system (commercial mobile alert system, CMAS), a third bit indicates whether to stop reading a paging message in NR unlicensed (NR unlicensed, NRU), and remaining last 5 bits are reserved (reserved). The reserved bits may be used to indicate other information, for example, may be used to indicate information and the like that are subsequently extended with development of communication technologies.

It should be noted that, if the first bit in the SMI field indicates that the current DCI carries the SM, the SMI field corresponds to the 8 bits. The first three bits are respectively filled with SI change information, ETWS information, and indication information used to indicate whether to stop reading the paging message in the NRU. If the first bit in the SIM field indicates that the current DCI does not carry the SM, the 8 bits corresponding to the SM field are meaningless bits and do not indicate any content.

(3) Frequency domain resource assignment (frequency domain resource assignment, FDRA) field

The FDRA field may be used to indicate a frequency domain resource used for PDSCH transmission, including a physical resource block (physical resource block, PRB) used for data transmission. A quantity of bits occupied by the FDRA field is determined based on a bandwidth size of a control resource set (control resource set, CORESET) 0.

(4) Time domain resource assignment (time domain resource assignment, TDRA) field

The TDRA field occupies 4 bits. The TDRA field may be used to indicate a time domain resource used for PDSCH transmission, including a timeslot used for data transmission, a symbol used in a timeslot, and the like.

(5) Mapping relationship (VRB-to-PRB mapping) field from a virtual resource block (virtual resource block, VRB) to a physical resource block (physical resource block, PRB)

The VRB-to-PRB mapping field occupies 1 bit. The VRB-to-PRB mapping field may be used to indicate a mapping manner used when a VRB is mapped to a PRB, and may be specifically interleaving mapping or non-interleaving mapping, or the like.

(6) Modulation and coding scheme (modulation and coding scheme, MCS) field

The MCS field may occupy 5 bits. The MCS field may be used to specify a modulation and coding scheme used during PDSCH transmission.

(7) Transport block scaling (TB scaling) field

The TB scaling field may occupy 2 bits, and is used to indicate whether a size of a transport block (transport block, TB) carried on a PDSCH carrying a paging message is scaled and a scaling ratio.

(8) Reserved field

The reserved field may occupy 6 bits.

When there are N PFs in one DRX cycle and one PF is divided into Ns POs, there are only N*Ns groups of POs in one DRX cycle in total. In this case, a plurality of terminals need to monitor DCI on a same PO in one DRX cycle. When the plurality of terminals monitor the DCI on the same PO, when one terminal receives DCI on a PO corresponding to the terminal, the terminal knows only that a terminal is paged on the current PO, but does not know whether the terminal is paged. Only after receiving the DCI, the terminal further receives, based on an indication of the DCI, a PDSCH carrying a paging message, and checks whether a paged terminal includes the terminal by viewing the paging message carried on the PDSCH. If the paged terminal includes the terminal, the terminal is paged. If the paged terminal does not include the terminal, the terminal is not paged. However, a probability that one terminal is paged is low. Because there are a large quantity of terminals that monitor DCI on a same PO and a probability that a network side device sends paging DCI is high, the terminal is also likely to be in a false alarm state of being paged. The false alarm state of being paged indicates that the terminal is not paged although the terminal receives the paging DCI and the PDSCH carrying the paging message.

To correctly receive the DCI and the PDSCH that is scheduled by the DCI and that carries the paging message, and determine, by the terminal based on the received DCI and the PDSCH, whether the terminal is in a "false alarm of being paged" or is paged, the following process needs to be performed: An access network device cyclically sends one or more synchronization signal and physical broadcast channel (physical broadcast channel, PBCH) blocks (synchronization signal and PBCH blocks, SSBs) before the PO of the terminal. After calculating the PO of the terminal and before monitoring the DCI on the PO, the terminal selects, from SSBs before the PO, one or more SSBs that are close to the PO, receives an SSB at a resource location of the selected SSB, and performs steps such as time/frequency synchronization and automatic gain control (automatic gain control, AGC) adjustment with the access network device based on the received SSB.

In this application, steps in which the terminal performs time/frequency synchronization and AGC adjustment by using the SSB may be collectively referred to as presynchronization. In addition, in one SSB cycle, although the access network device sends a plurality of SSBs, the SSBs in one SSB cycle usually correspond to different beam sending directions. For a same terminal, SSBs used when the terminal performs presynchronization should correspond to a same beam sending direction. Therefore, one or more SSBs used by the terminal to perform presynchronization are usually located in different SSB cycles.

It should be noted that in this application, a cycle for sending an SSB, a time interval between adjacent SSBs, and a resource location of an SSB may be pre-specified in a protocol, or may be configured by the network side device for the terminal by using system information. The SSB before the PO may refer to an SSB whose time domain location is before a time domain location of the PO and whose time domain location does not overlap the time domain location of the PO. All the SSBs before the PO of the terminal are SSBs that may be used for/can be used for presynchronization by the terminal. These SSBs may be referred to as available SSBs. This is uniformly described herein, and details are not described below again.

For example, FIG. lb is a schematic diagram of a relationship between a PO and an SSB. There are two SSBs before a time domain location of the PO. The two SSBs may be referred to as available SSBs. The terminal may select and receive, from the two SSBs, one SSB closest to the PO to perform presynchronization, or may select and receive the two SSBs to perform presynchronization. In FIG. lb, the two SSBs may be located in different SSB cycles.

For another example, FIG. 1c is a schematic diagram of a time domain location relationship between a plurality of POs and an SSB. As shown in FIG. 1c, there are SSB 1 to SSB 5 before a PO 5, there are SSB 1 to SSB 4 before a PO 4, there are SSB 1 to SSB 3 before a PO 3, there are SSB 1 to SSB 3 before a PO 2, and there are SSB 1 and SSB 2 before a PO 1. If the PO of the terminal is the PO 5 in FIG. lc, the terminal may select and receive one, two, three, or four SSBs that are closest to the PO 5 and that are in the SSB 1 to the SSB 5 before the PO 5 to perform presynchronization, or may select and receive the five SSBs to perform presynchronization. Likewise, if the PO of the terminal is the PO 4 in FIG. 1c, the terminal may select and receive one, two, or three SSBs that are closest to the PO 4 and that are in the SSB 1 to SSB 4 to perform presynchronization, or may select and receive the four SSBs to perform presynchronization. It should be noted that, an up-down relationship between the SSBs and the POs in FIG. 1c is mainly used to prevent that a time domain location relationship is difficult to distinguish when the SSBs and the POs overlap together, and does not represent a specific frequency domain location relationship between the POs and the SSBs. In other words, FIG. 1c mainly represents a time domain location status of the SSBs and the POs. Similarly, in FIG. 1c, the SSB 1 to the SSB 5 may be located in different SSB cycles.

Specifically, the terminal may determine, based on channel quality (for example, reference signal received power (reference signal received power, RSRP), reference signal received quality (reference signal received quality, RSRQ), or a signal to interference plus noise ratio (signal to interference plus noise ratio, SINR)) between the terminal and the access network device and/or a hardware processing status of the terminal, an SSB from which the terminal starts to receive the SSB sent by the access network device and that is from the available SSBs, that is, determine which available SSBs can be used for presynchronization. For example, the terminal determines, based on the channel quality between the terminal and the access network device, which SSBs are used for presynchronization. When the terminal is close to the access network device, the SINR is high, coverage of the terminal is better, an SSB signal is strong, and the terminal uses a small quantity of SSBs for presynchronization. However, when the terminal is far away from the access network device, the SINR is low, the coverage of the terminal is poorer, an SSB signal is weak, and the terminal uses a large quantity of SSBs for presynchronization.

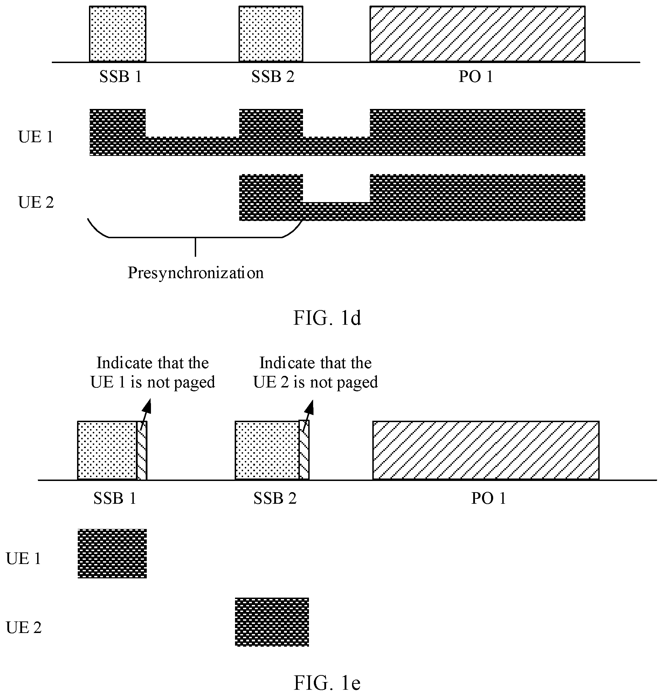

For example, as shown in FIG. 1d, POs of UE 1 and UE 2 are a PO 1, and two SSBs located before the PO 1 may be used as available SSBs for presynchronization. Specifically, if coverage of the UE 1 is poor, an SSB 1 and an SSB 2 are used to perform presynchronization. If coverage of the UE 2 is good, the UE 2 may use one SSB (for example, the SSB 2 closest to the PO 1) to perform presynchronization.

The terminal needs to consume energy when receiving the SSB. During duration between after receiving the SSB and the PO, or during duration between two adjacent SSBs when receiving a plurality of SSBs, although the terminal does not need to receive a signal, to "prepare for communication (for example, prepare to monitor DCI on the PO or accurately receive a next SSB)", the terminal needs to maintain a working state at all times. However, the terminal in the working state consumes some energy.

FIG. 1d is used as an example. After the UE 1 receives the SSB 1, the UE 1 continues to maintain a working state, receives the SSB 2, and performs presynchronization based on the SSB 1 and the SSB 2. After the presynchronization succeeds, the UE 1 continues to maintain the working state, and monitors DCI on the PO 1 of the UE 1. In other words, the UE 1 needs to maintain the working state in a time period from starting to receive the SSB 1 to monitoring the DCI on the PO 1, and consumes energy of the UE 1. Similarly, the UE 2 also needs to enable a working state to prepare to receive the SSB 2. After receiving the SSB 2, the UE 2 performs presynchronization based on the SSB 2. After the presynchronization succeeds, the UE 2 continues to maintain the working state, and monitors DCI on the PO 1 of the UE 2. The UE 2 needs to maintain the working state in a time period from starting to receive the SSB 2 to monitoring the DCI on the PO 1, and consumes energy of the UE 2.

It can be learned from the foregoing that, in a process in which the terminal receives a paging message, a large part of energy consumed by the terminal is consumed in a process in which the terminal receives the SSB and performs presynchronization, especially in a time period in which "the terminal does not receive a signal but still needs to maintain a working state", some energy is additionally consumed. In addition, because the plurality of terminals need to monitor the DCI on the same PO in one DRX cycle, to determine whether each terminal is paged, each terminal needs to perform processes such as presynchronization, and DCI and PDSCH receiving. In other words, the foregoing additional energy consumption is inevitable.

However, most terminals have a high requirement on energy saving. If a terminal excessively consumes energy, performance of the terminal is affected, and user experience is reduced. In view of this, embodiments of this application provide the following solution: Before a PO (for example, during presynchronization of a terminal), the terminal is notified of whether paging is sent on the PO, so that the terminal can know earlier whether the terminal can be paged, stop working as early as possible when the terminal is not paged, and do not maintain a working state continuously, to avoid unnecessary energy consumption. For example, as shown in FIG. 1e, if UE 1 learns, nearby an SSB 1, that the UE 1 is not paged, the UE 1 does not maintain a working state subsequently; and if UE 2 learns, nearby an SSB 2, that the UE 2 is not paged, the UE 2 does not maintain a working state. Compared with FIG. 1d, energy consumption of the UE 11 and energy consumption of the UE 12 are significantly reduced.

In this application, information indicating whether paging is sent on a PO may be referred to as a paging indication. It should be noted that a name of the paging indication is not limited in this application. The paging indication may be alternatively referred to as a wake-up signal (wake-up signal, WUS), an early paging indication (early paging indication or early transmitted paging indication), a pre-paging indication (pre-paging indication), another name, or the like. This is not limited.

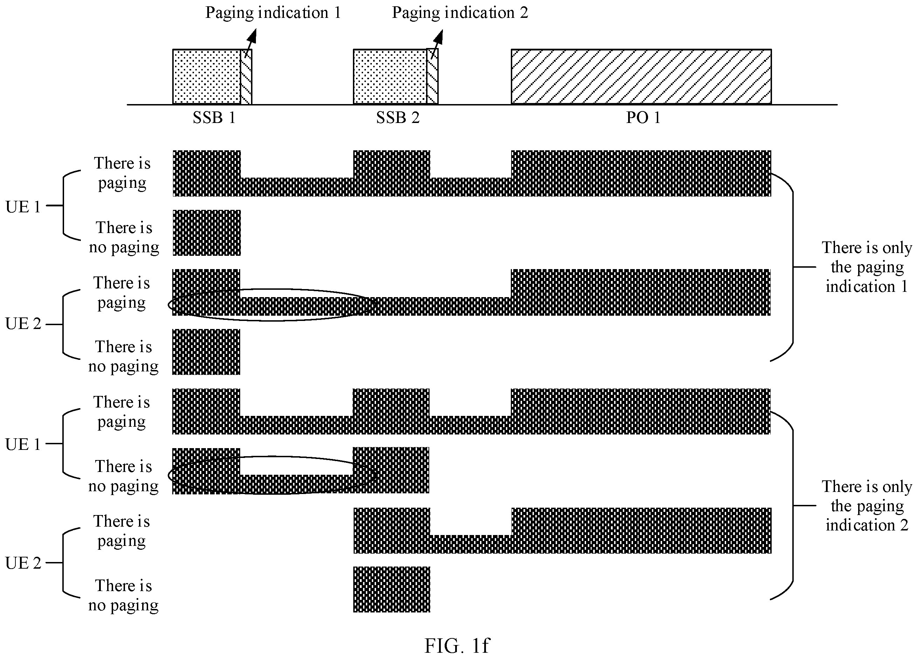

However, if a location of a paging indication corresponding to the PO is not properly designed, some terminals still need to consume large energy. For example, as shown in FIG. 1f, UE 1 is UE with poor coverage, and UE 2 is UE with good coverage. A paging indication may be sent nearby an SSB 1 or nearby an SSB 2. If the paging indication is sent only nearby the SSB 1, power consumption of the UE 1 and power consumption of the UE 2 when that there is paging on the PO 1 or there is no paging on the PO 1 is indicated to the UE 1 and the UE 2 by using the paging indication are shown in FIG. 1f. Similarly, if the paging indication is sent only nearby the SSB 2, power consumption of the UE 1 and power consumption of the UE 2 when that there is paging on the PO 1 or there is no paging on the PO 1 is indicated to the UE 1 and the UE 2 by using the paging indication are shown in FIG. 1f. It can be learned that the UE 2 originally does not need to use the SSB 1 to perform presynchronization, but when the paging indication is sent only nearby the SSB 1, the UE 2 further needs to receive the SSB 1 to receive the paging indication, and after being indicated that there is paging, the UE 2 still needs to maintain a working state until the PO 1. For this point, a circled part in the third row in FIG. 1f may be compared with the seventh row in FIG. 1f. In addition, if the paging indication is sent only nearby the SSB 2, because the UE 1 cannot know in advance whether there is paging, to ensure that paging can be correctly received when there is paging, the UE 1 needs to receive the SSB 1, and maintain a working state until the UE 1 receives the paging indication after the SSB 2. If that there is no paging is indicated, it can be seen from a comparison between a circled part in the sixth row in FIG. 1f and the second row in FIG. 1f that more energy is wasted.

It can be learned from FIG. 1f that even if a paging indication used to indicate whether there is paging on a PO is designed, some energy may be wasted in a process of receiving a paging message by some terminals. For a terminal, an optimal solution is that "the terminal receives a paging indication nearby a first SSB that needs to be received by the terminal". However, a plurality of terminals need to monitor DCI on a same PO in one DRX cycle, coverage and/or hardware processing statuses of the terminals may be different, a quantity of SSBs received by the terminals may be different, and different terminals perform presynchronization at different start points. To be specific, first SSBs corresponding to different terminals may be different. An access network device cannot learn which SSB is the first SSB received by most terminals, and therefore cannot send a paging indication on the first SSB used by most terminals, to reduce energy consumption of most terminals.

To ensure that each terminal can receive a paging indication nearby a first SSB corresponding to the terminal to the greatest extent, a best solution is that a paging indication corresponding to a same PO is sent nearby a plurality of SSBs before the PO. In other words, a paging indication corresponding to one PO is sent nearby a plurality of SSBs. This has the following two advantages: In one aspect, a terminal corresponding to the PO can high probabilistically receive the paging indication nearby the first SSB of the terminal, stop working as early as possible based on an indication of the paging indication, and be in a sleep state, to reduce energy consumption. In another aspect, when a PO is divided into a plurality of MOs and different MOs correspond to different SSBs in one SSB cycle, if one PO corresponds to paging indications nearby a plurality of SSBs, and the plurality of SSBs are preferably in a one-to-one correspondence with a plurality of MOs obtained by dividing the PO, a terminal corresponding to each MO can receive a paging indication nearby the SSB, and reduce energy consumption based on an indication of the paging indication. For example, as shown in FIG. 1f, paging indications are sent nearby both the SSB 1 and the SSB 2. To be specific, for a same PO, a plurality of paging indications may be used to indicate whether there is paging on the PO, to ensure that most terminals that monitor DCI on the PO can receive paging indications nearby the first SSBs that need to be received by the terminals.

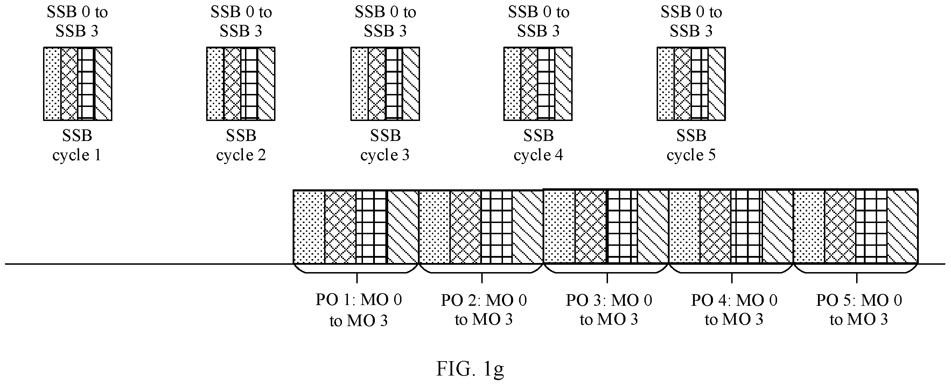

It should be noted that when one PO corresponds to paging indications nearby a plurality of SSBs, the plurality of SSBs may be located in a same SSB cycle or different SSB cycles. For example, when a plurality of SSBs correspond to a plurality of MOs, the plurality of SSBs are located in a same SSB cycle. When a plurality of SSBs correspond to a same MO, the plurality of SSBs are located in different SSB cycles. For example, as shown in FIG. 1g, there are five SSB cycles, four SSBs are sent in each SSB cycle, and indexes (indexes) of the SSBs are separately SSB 0 to SSB 3. In this case, there are four MOs in one PO, and indexes are separately 0 to 3. Each SSB is in a one-to-one correspondence with each MO in the PO, that is, an SSB 0 corresponds to an MO 0, an SSB 1 corresponds to an MO 1, an SSB 2 corresponds to an MO 2, and an SSB 3 corresponds to an MO 3. A relationship between the SSBs and the MOs is shown in FIG. 1g. Parts of a same padding pattern represent a corresponding SSB and MO.

In addition, SSBs before different POs may overlap, and different POs may be associated with a same SSB. Therefore, paging indications nearby a same SSB may be associated with a plurality of POs, and need to indicate whether there is paging on the plurality of POs. For example, as shown in FIG. 1c, SSBs before the PO 2 include the SSB 1 to the SSB 3, SSBs before the PO 1 include the SSB 1 and the SSB 2, and there are two overlapping SSBs before two different POs: the SSB 1 and the SSB 2. In this case, both the SSB 1 and/or the SSB 2 may be associated with the PO 1 and the PO 2, and are used by terminals corresponding to the PO 1 and the PO 2 to perform presynchronization. For example, the SSB 2 is associated with the PO 1 and the PO 2. A paging indication nearby the SSB 2 may be associated with the PO 1 and the PO 2, to indicate whether there is paging on the PO 1 and the PO 2.

It should be noted that the SSB in this application may be one or more SSBs that are before a paging occasion and that are closest to the PO. A paging indication nearby the SSB may be a paging indication that uses an end moment of the SSB as a start point, may be a paging indication that is after the end moment of the SSB and whose time difference from the end moment of the SSB is less than a preset time threshold, or may be a paging indication that is close to the SSB and that is after the end moment of the SSB. The preset time threshold may be set based on a requirement, and is not limited. In addition, in this application, the SSB is not limited to the SSB that is closest to the PO and that is before the paging occasion. Alternatively, a corresponding SSB may be preconfigured for the paging occasion, that is, the paging occasion is associated with the SSB. In this case, a paging indication corresponding to the paging occasion may be located nearby the SSB.

The following describes a design manner of a paging indication by using an example in which a paging indication is associated with R paging occasions and is used to indicate whether there is paging on the R paging occasions, and R is an integer greater than or equal to 1.

First, to enable the paging indication to have a function of indicating whether there is paging on a plurality of POs, the paging indication may include at least a first field, and the first field may be used to indicate whether there is paging on the R POs.

It should be noted that, in this application, the R POs indicated by the first field may be different POs in a same DRX cycle, POs in different DRX cycles, or POs that appear in different DRX cycles. This is not limited. Specifically, the R POs may be POs that appear in a same DRX cycle. In this case, the R POs are different POs. For example, it is assumed that the first field indicates whether there is paging on a PO 1, a PO 2, and a PO 3, and the PO 1, the PO 2, and the PO 3 may be different POs that appear in a same DRX cycle 1. Alternatively, the R POs may be the POs that appear in the different DRX cycles. For example, it is assumed that the first field indicates whether there is paging on a PO 1, a PO 2, and a PO 3. The PO 1 may be a PO in a DRX cycle 1, the PO 2 and the PO 3 may be POs in a DRX cycle 2, and the three POs are different POs. Alternatively, the R POs may be R POs that cyclically appear in a plurality of DRX cycles. To be specific, the first field is used to indicate whether there is paging on one or more POs in R consecutive DRX cycles, so that when there is no paging on the PO in several consecutive DRX cycles, a terminal is indicated in advance to remain a sleep state in the several consecutive DRX cycles, to achieve an objective of saving energy for a long time. For example, the first field may be used to indicate whether there is paging on a PO 1 in a DRX cycle 1, a PO in a DRX cycle 2, and a PO 3 in a DRX cycle 3, that is, the first field is used to indicate whether there is paging on a same PO that is cyclically sent, or the first field may indicate whether there is paging on the PO 1 in the DRX cycle 1, the PO in the DRX cycle 2, the PO 1 in the DRX cycle 1, and the PO 2 in the DRX cycle 2.

For example, the first field may include R pieces of indication information. The R pieces of indication information are in a one-to-one correspondence with the R paging occasions. An $i^{th}$ piece of indication information of the R pieces of indication information indicates whether paging is sent on an $i^{th}$ paging occasion of the R paging occasions, and i is an integer greater than or equal to 1 and less than or equal to R.

An order of the R pieces of indication information in the first field is not limited in this application. The R pieces of indication information may be arranged in the first field based on time domain locations of the R paging occasions. For example, based on a sequence of the time domain locations, indication information corresponding to a paging occasion whose time domain location is earlier is arranged in the front, and indication information corresponding to a paging occasion whose time domain location is later is arranged in the rear. Alternatively, indication information corresponding to a paging occasion whose time domain location is earlier is arranged in the rear, and indication information corresponding to a paging occasion whose time domain location is later is arranged in the front. Alternatively, the indication information may be arranged in the first field based on a preset order. This is not limited. For example, a paging indication nearby an SSB 2 needs to indicate information about a PO 1, a PO 2, and a PO 3. Because a sequence of the three POs is the PO 1 to the PO 3, a sequence of three pieces of indication information in DCI is indication information of the PO 1, indication information of the PO 2, and indication information of the PO 3.

In an example, if terminals on a same paging occasion are not grouped, each piece of indication information may include one bit, and the bit is used to indicate whether there is paging on one paging occasion. For example, a binary bit "1" indicates that there is paging on the paging occasion, and a binary bit "0" indicates that there is no paging on the paging occasion.

In another example, if terminals on a same paging occasion are grouped into a plurality of groups, for example, M groups, indication information corresponding to the paging occasion may include M bits, and one bit is used to indicate whether there is paging in one group. The M bits in the indication information may be arranged in the indication information based on a sequence of group numbers of the M groups. Specifically, a group to which a terminal belongs may be obtained through calculation based on a UE_ID, for example, floor(floor(UE_ID/N)/Ns)modM, or floor(UE_ID/N/Ns)modM. In this manner, a quantity of terminals in a group may be further reduced. For example, N*Ns groups are changed to N*Ns*M groups, and a false alarm probability of a terminal in each of the N*Ns*M groups may be reduced, to increase a probability of successfully paging the terminal.

In still another example, if the R POs indicated by the first field are POs located in several consecutive DRX cycles, that is, the first field is used to indicate whether there is paging on one or more POs in Q consecutive DRX cycles, a specific indication method of the first field may include the following several cases. Case 1: If terminals on a paging occasion are not grouped and the first field is used to indicate whether there is paging on a same PO in R consecutive DRX cycles, that is, in this case, Q=R, the first field includes one piece of indication information. The indication information may include one quantity of bits, and the quantity of bits is used to indicate whether there is paging on the PO in the R consecutive DRX cycles, or the indication information may include R quantities of bits, and the $j^{th}$ quantity of bits is used to indicate whether there is paging on the PO in the $j^{th}$ DRX cycle. Alternatively, the first field includes R pieces of indication information, one piece of indication information may include one quantity of bits, the $i^{th}$ piece of indication information is used to indicate whether there is paging on the PO in the $j^{th}$ DRX cycle, and j is an integer greater than or equal to 1 and less than or equal to R.

Case 2: If terminals on a paging occasion are not grouped, the first field is used to indicate whether there is paging on a plurality of different POs (for example, P POs) in the Q consecutive DRX cycles, P and Q are positive integers, and $P*Q=R$, the first field includes P pieces of indication information. One piece of indication information may include one quantity of bits, the $i^{th}$ piece of indication information is used to indicate whether there is paging on the $i^{th}$ PO in the Q consecutive DRX cycles. Alternatively, the first field includes P pieces of indication information, one piece of indication information may include Q quantities of bits, and the $j^{th}$ quantity of bits in the $i^{th}$ piece of indication information is used to indicate whether there is paging on the $i^{th}$ PO in the $j^{th}$ DRX cycle. Alternatively, the first field includes R pieces of indication information, one piece of indication information may include one quantity of bits, the $i^{th}$ piece of indication information is used to indicate whether there is paging on the $i^{th}$ PO in the $j^{th}$ DRX cycle, and j is an integer greater than or equal to 1 and less than or equal to R.

Case 3: If terminals on a paging occasion are grouped into M groups, the first field is used to indicate whether there is paging on a plurality of different POs (for example, P POs) in the Q consecutive DRX cycles, P and Q are positive integers, and $P*Q=R$, the first field includes P pieces of indication information. One piece of indication information may include M quantities of bits, the $s^{th}$ quantity of bits in the $i^{th}$ piece of indication information may be used to indicate whether there is paging for the $s^{th}$ group on the $i^{th}$ PO in the Q consecutive DRX cycles, and s is an integer greater than or equal to 1 and less than M. Alternatively, the first field includes P pieces of indication information, one piece of indication information may include $Q*M$ quantities of bits, and the $s^{th}$ quantity of bits in the $i^{th}$ piece of indication information is used to indicate whether there is paging for the $s^{th}$ group on the $i^{th}$ PO in the $j^{th}$ DRX cycle.

In this application, quantities of paging occasions corresponding to different paging indications may be the same or different. In other words, the quantity of paging occasions corresponding to the paging indication may be fixed or may be dynamically adjusted. Quantities of pieces of indication information included in first fields in different paging indications may be the same or different. In other words, the quantity of pieces of indication information included in the first field varies with a paging occasion corresponding to the paging indication, and may be a fixed quantity or may be dynamically adjusted. Quantities of bits included in different indication information may be the same or different, and may be fixed quantities or may be dynamically adjusted.

Further, information included in an SM is also important to a terminal. If an SMI and an SM in the DCI are not included in the paging indication, to determine whether there is the SM and further determine whether the SM includes one or more of the following information: system information change indication information, earthquake and tsunami warning information, commercial mobile alert information, and indication information indicating to stop monitoring a paging message, even if the terminal knows that no paging message is sent, the terminal still needs to receive the DCI on a PO, and obtain the SM from the DCI. In this way, the terminal needs to maintain a working state at a location of the PO in any case, and consume a large amount of energy.

To avoid energy consumption caused by monitoring, by the terminal, the SMI carried in the DCI and obtaining the SM, further, the paging indication may further carry a second field and a third field. The second field and the third field may be used by the terminal to obtain some information included in the SM before a PO of the terminal. Because information included in the SM, such as the SI change information and the ETWS information, does not change frequently, SMs sent on a plurality of adjacent POs usually should be the same. Therefore, when one paging indication is used to indicate whether there is paging on R adjacent POs, if the paging indication includes a second field and a third field, information included in the second field and information included in the third field may be common information of the R POs, and are referred to as PO common information. The second field and the third field may be oriented to all terminals corresponding to the R POs. For all the terminals corresponding to the R POs, content indicated by the second field and content indicated by the third field are the same.

The second field may be used to indicate whether the paging indication includes an SM, the second field may occupy 1 bit, and the 1 bit may be used to indicate whether the paging indication includes the SM. The second field may be referred to as an SMI. However, an SMI in the paging indication and the SMI in the DCI are different in terms of a quantity of occupied bits (or referred to as a length), and indicate different content.

The third field may be used to indicate an SM, and the SM may include one or more of system information change indication information, earthquake and tsunami warning information, commercial mobile alert information, and indication information indicating to stop monitoring a paging message. A length (or a quantity of occupied bits) of the third field may be specified in a protocol or configured by a network device (for example, an access network device). For example, the access network device may configure the length of the third field based on information that needs to be indicated to the terminal.

For example, the third field may be specified to or configured to occupy 2 bits, 3 bits, 8 bits, or the like. This is not limited. If the third field occupies 2 bits, when the second field indicates that the SM exists, the third field may carry the SI change information and the ETWS information. If the third field occupies 3 bits, when the second field indicates that the SM exists, the third field may carry the SI change information, the ETWS information, and information about whether to stop paging (stop paging) in NRU. If the third field occupies 8 bits, when the second field indicates that the SM exists, the third field may carry the SI change information, the ETWS information, and information about whether to stop paging (stop paging) in NRU, and the remaining 5 bits are reserved.

Further, an auxiliary reference signal (assistance RS) is a reference signal that is configured by the access network device for one or more terminals in an idle mode or an inactive mode and that is used to assist the terminal in performing time-frequency synchronization and AGC adjustment. To ensure that the terminal normally uses these RSs, the access network device may indicate to the terminal in advance whether these RSs are still in an available state, that is, availability of the RSs. Therefore, in addition to the first field, the second field, and the third field, the paging indication may further carry a fourth field, and the fourth field may be used to indicate availability (availability) of the auxiliary RS.

In an example, a length of the fourth field may be equal to a quantity of auxiliary reference signals or auxiliary reference signal groups configured by the network device. The auxiliary reference signal group may include one or more auxiliary reference signals, and is an auxiliary reference signal group obtained by dividing the auxiliary reference signals configured by the network device based on a preset division granularity. The preset division granularity may be set based on a requirement. For example, one auxiliary reference signal group may include four auxiliary reference signals, or one auxiliary reference signal group may include three auxiliary reference signals. This is not limited.

It should be noted that, in this example, the fourth field is common information of the R POs, and is referred to as PO common information. The fourth field is oriented to all terminals corresponding to the R POs. Each terminal corresponding to the R POs may parse the fourth field, and determine, based on information carried in the fourth field, whether the auxiliary reference signal or the auxiliary reference signal group configured by the network device is available.

For example, if the access network device configures nine RSs in total, the length of the fourth field may be 9 bits, and the 9 bits are in a one-to-one correspondence with the nine RSs, to respectively indicate whether the nine RSs are available. Alternatively, when one auxiliary reference signal group includes three auxiliary reference signals and there are three auxiliary reference signal groups, the length of the fourth field is 3 bits, and the 3 bits are in a one-to-one correspondence with the three auxiliary reference signal groups, to respectively indicate whether the three auxiliary reference signal groups are available.

In another example, the length of the fourth field may be equal to a quantity of auxiliary reference signals or auxiliary reference signal groups associated with the R paging occasions. For related description of the auxiliary reference signal group, refer to the foregoing description. Details are not described again.

In this example, the fourth field is common information of the R POs, and is referred to as PO common information. The fourth field may be oriented to all terminals corresponding to the R POs. Each of all the terminals corresponding to the R POs may parse the fourth field, and determine, based on information carried in the fourth field, the auxiliary reference signals or the auxiliary reference signal groups associated with the R paging occasions.

For example, it is assumed that the access network device configures 10 RSs in total: an RS 1 to an RS 10, R=3, and the R paging occasions are respectively a PO 1 to a PO 3, where the RS 1 to the RS 6 are associated with the PO 1 to the PO 3. In this case, the length of the fourth field may be equal to 6 bits, and the 6 bits are in a one-to-one correspondence with the six RSs associated with the PO 1 to the PO 3, to indicate whether the six RSs associated with the three POs, namely, the PO 1 to the PO 3 are available. Alternatively, when one auxiliary reference signal group includes two auxiliary reference signals and there are three auxiliary reference signal groups, the length of the fourth field is 3 bits, and the 3 bits are in a one-to-one correspondence with the three auxiliary reference signal groups, to respectively indicate whether three auxiliary reference signal groups associated with the three POs, namely, the PO 1 to the PO 3, are available.

In still another example, the fourth field includes R subfields, the R subfields correspond to the R paging occasions, one subfield may be used to indicate availability of an auxiliary reference signal associated with a paging occasion corresponding to the subfield, and a length of one subfield may be equal to a quantity of auxiliary reference signals or auxiliary reference signal groups associated with a paging occasion corresponding to the subfield. To be specific, the fourth field is divided into a subfield corresponding to a single specific paging occasion, and one subfield indicates availability of an auxiliary reference signal associated with one paging occasion. Therefore, in this example, one subfield carries information about one specific PO, is oriented to a single PO, and is PO specific information.

For example, it is assumed that the access network device configures 10 RSs in total: RS1 to RS10, R=3, and the R paging occasions are respectively: PO 1 to PO 3, where the RS 1 and the RS 2 are associated with the PO 1, the RS 3 and the RS 4 are associated with the PO 2, and the RS 5 and the RS 6 are associated with the PO 3. In this case, the fourth field may be divided into three subfields, a length of each subfield is equal to 2 bits, and each bit indicates one RS. Alternatively, when one RS group includes two RSs, a length of each subfield is equal to 1 bit, and each bit indicates one RS group. The three subfields are in a one-to-one correspondence with the PO 1 to the PO 3. For example, a first subfield indicates whether the two RSs associated with the PO 1 are available, a second subfield indicates whether the two RSs associated with the PO 2 are available, and a third subfield indicates whether the two RSs associated with the PO 3 are available.

It should be noted that, in this example, the subfields may be arranged based on time domain locations of POs associated with the subfields. For example, a subfield corresponding to a PO whose time domain location is in the front is arranged in the front, or a subfield corresponding to a PO whose time domain location is in the back are arranged in the front. Alternatively, the subfields may be arranged in a preset order. This is not limited.

Further, to more flexibly adjust a quantity of POs indicated by the first field or a length of the first field, the paging indication may further include a fifth field. In an example, the fifth field may be used to directly or indirectly indicate the quantity of paging occasions indicated by the first field. For example, a value of the fifth field may be the quantity R of the paging occasions indicated by the first field, and the quantity R may be directly determined based on the value of the fifth field. Alternatively, there is a mapping relationship between the value of the fifth field and the quantity R, and the quantity R of the paging occasions indicated by the first field may be determined based on the mapping relationship.

For example, Table 1 shows a mapping relationship between bits carried in the first field and a quantity R. As shown in Table 1, a bit 00 corresponds to a quantity 2, a bit 01 corresponds to a quantity 3, a bit 10 corresponds to a quantity 4, and a bit 11 corresponds to a quantity 5. It is assumed that the fifth field carries the bit 10, it can be learned from Table 1 that the quantity R of the paging occasions indicated by the fifth field is 4.

**Table 1**

| Bit | Value of R |
| --- | --- |
| 00 | 2 |
| 01 | 3 |
| 10 | 4 |
| 11 | 5 |

In another example, the fifth field may be used to indicate the length of the first field. As described above, if the first field includes the R pieces of indication information and one piece of indication information includes one bit, the length of the first field may be 5 bits, and a value of the fifth field may indicate 5. For example, the fifth field may directly carry a value R, or carry a quantity of binary bits that have a mapping relationship with R. As described above, if the first field includes the R pieces of indication information, one piece of indication information includes M bits, and the length of the first field is R*M, a value of the fifth field may indicate R*M. For example, the fifth field may directly carry a value R*M, or carry a quantity of binary bits that have a mapping relationship with R*M.

It should be noted that the fifth field is common information of the POs, and is referred to as PO common information. The fifth field may be oriented to all terminals corresponding to the R POs. All the terminals corresponding to the R POs may parse the fifth field, and determine, based on information carried in the fifth field, the quantity R of the paging occasions or lengths of the indication information corresponding to the R paging occasions.

Other fields in the DCI, such as an FDRA field, a TDRA field, a VRB-to-PRB mapping field, an MCS field, and a TB scaling field, are mainly used to indicate a time-frequency resource, a transmission parameter, and the like that are used to schedule a PDSCH carrying a paging message. Because the paging indication is sent earlier than the PO and a time interval between the paging indication and the PDSCH may be relatively long, the access network device cannot be able to predict/determine in advance a time-frequency resource and a transmission parameter to be used when the PDSCH is actually sent. Therefore, the FDRA field, the TDRA field, the VRB-to-PRB mapping field, the MCS field, and the TB scaling field are not suitable to be included in the paging indication.

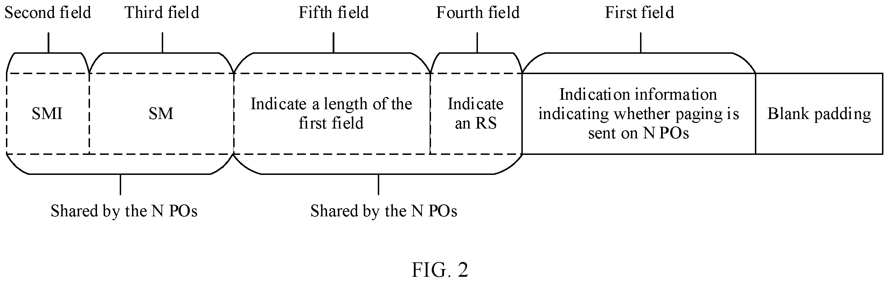

It can be learned from the foregoing that, as shown in FIG. 2, the paging indication may include at least the first field, and may further include the second field, the third field, the fourth field, and the fifth field. In this case, if the length of the paging indication is long enough and there are remaining bits, these remaining bits may be used as blank padding (padding) in the paging indication. As shown in FIG. 2, the first field is a PO specific field, indication information in the first field is for a specific PO, and the second field, the third field, and the fifth field are PO common fields, and may be oriented to all the terminals corresponding to the R POs. These fields are shared by the R POs. The fourth field may be a PO common field or a PO specific field.

It should be noted that FIG. 2 is merely an example drawing. In addition to the fields shown in FIG. 2, with development of communication technologies, FIG. 2 may further include another field that can be included in the paging indication. This is not limited.

Based on the design shown in FIG. 2, energy consumption of a terminal may be reduced by indicating, to the terminal in advance, whether there is paging on a PO; and one paging indication may be used to indicate a plurality of POs, to indicate whether there is paging on the plurality of POs at a time, a PO common field is distinguished from a PO specific field, and the PO common field is used as much as possible when sufficient indication information is provided, to reduce signaling overheads.

The following describes how the terminal determines which POs are R POs indicated by a first when the first field indicates whether there is paging on the R POs.

Manner 1: One paging occasion corresponds to K paging indications, that is, one paging occasion may be indicated by K paging indications.

K is an integer greater than or equal to 1, and K may be preconfigured by an access network device for the terminal or may be pre-specified in a protocol. This is not limited. The K paging indications corresponding to the paging occasion may be K consecutive paging indications that are closest to the paging occasion and that are before the paging occasion. The K paging indications correspond to K consecutive SSBs that are closest to the paging occasion and that are before the paging occasion. The paging indication is located nearby the SSB corresponding to the paging indication. Optionally, the K consecutive SSBs are K SSBs in K consecutive SSB cycles, or SSBs with a same index (index) in K consecutive SSB cycles.

According to Manner 1, after obtaining a PO of the terminal through calculation, the terminal may determine, based on a time domain location of the PO and time domain locations of SSBs, K consecutive SSBs that are before the PO of the terminal and that are closest to the PO, and determine K paging indications nearby the K SSBs corresponding to the PO of the terminal. Further, according to the same method, the terminal may obtain several other POs nearby the PO of the terminal through calculation, and determine K paging indications corresponding to each of the several POs. The K paging indications corresponding to each of the several POs may be the same paging indications as the K paging indications corresponding to the PO of the terminal. In this way, the terminal may determine POs associated with each of the K paging indications corresponding to the PO of the terminal.

Further, after determining the POs associated with the paging indications corresponding to the PO of the terminal, the terminal may determine, based on time domain locations of the POs and an ordering rule of indication information in the first field, indication information corresponding to the PO of the terminal, determine, based on the indication information corresponding to the PO of the terminal, whether there is paging on the PO of the terminal, and stop working as early as possible when there is no paging, to reduce energy consumption.

It can be learned from the foregoing process that, in Manner 1, quantities of POs corresponding to different paging indications may be the same or different.

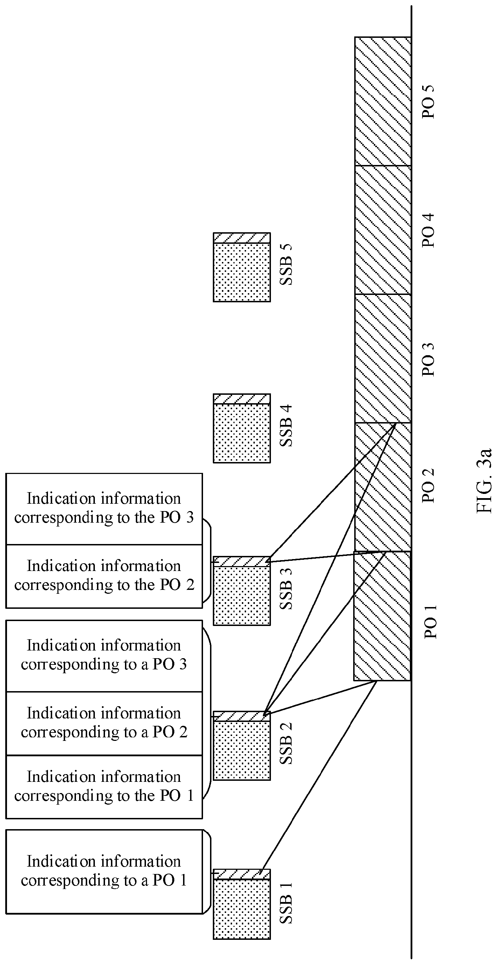

For example, as shown in FIG. 3a, it is assumed that one PO corresponds to two paging indications. There are SSB 1 to SSB 5 before a PO 5, there are SSB 1 to SSB 4 before a PO 4, there are SSB 1 to SSB 3 before a PO 3, there are SSB 1 to SSB 3 before a PO 2, and there are SSB 1 and SSB 2 before a PO 1. A paging indication corresponding to the PO 5 may be two corresponding paging indications nearby the SSB 4 and the SSB 5. A paging indication corresponding to the PO 4 may be two corresponding paging indications nearby the SSB 4 and the SSB 3. A paging indication corresponding to the PO 3 may be two corresponding paging indications nearby the SSB 3 and the SSB 2. A paging indication corresponding to the PO 2 may be two corresponding paging indications nearby the SSB 3 and the SSB 2. A paging indication corresponding to the PO 1 may be two corresponding paging indications nearby the SSB 2 and the SSB 1. It can be learned that the paging indication nearby the SSB 4 may correspond to the PO 4 and the PO 5, the paging indication nearby the SSB 3 may correspond to the PO 3 and the PO 2, the paging indication nearby the SSB 2 may correspond to the PO 3, the PO 2, and the PO 1, and the paging indication nearby the SSB 1 corresponds to only the PO 1. It is assumed that the PO of the terminal is the PO 2, and the PO 2 corresponds to the paging indication nearby the SSB 2. According to the foregoing method, the terminal may determine that the paging indication corresponding to the PO 2 also corresponds to the PO 1 and the PO 3, and determine, based on a time domain location relationship between the PO 3, the PO 2, and the PO 1 and an ordering rule corresponding to indication information, that indication information corresponding to the PO 2 is second indication information in the first field.

Manner 2: One monitoring time interval is configured before a paging occasion, so that after obtaining a paging occasion of the terminal through calculation, the terminal receives, within the monitoring time interval corresponding to the paging occasion, a paging indication corresponding to the paging occasion, obtains indication information corresponding to the paging occasion from the received paging occasion, and determines, based on the indication information, whether there is paging on the paging occasion.

The monitoring time interval may be configured by an access network device for the terminal. For example, the access network device sends monitoring time window (monitoring window) configuration information to the terminal, and the terminal receives the monitoring time window configuration information, and determines, based on the received monitoring time window configuration information, the monitoring time interval corresponding to the paging occasion.

Specifically, the monitoring time window configuration information may directly include the monitoring time interval. Alternatively, the monitoring time window configuration information includes a start point of the monitoring time interval. In this case, an end point of the monitoring time interval may be set to a start moment of the paging occasion or a time point before the start moment of the paging occasion. Alternatively, the monitoring time configuration information may include a start point and an end point of the monitoring time interval. This is not limited.

According to Manner 2, after obtaining the PO of the terminal through calculation, the terminal may obtain, through calculation, several other POs nearby the PO of the terminal, and determine a paging indication corresponding to each of the several POs. In this case, it is assumed that a paging indication corresponding to the PO is nearby an SSB before the PO. Further, the terminal may determine which paging indications corresponding to the several other POs nearby the PO of the terminal are also included in the monitoring time interval corresponding to the PO of the terminal, to determine POs associated with the paging indications in the monitoring time interval. Further, after determining the POs associated with the paging indications in the monitoring time interval, the terminal may determine the indication information corresponding to the PO of the terminal based on time domain locations of the POs and an ordering rule of indication information in the first field, to determine, based on the indication information corresponding to the PO of the terminal, whether there is paging on the PO of the terminal, and stop working as early as possible when there is no paging, so as to reduce energy consumption.

It can be learned from the foregoing process that, in Manner 2, quantities of paging occasions corresponding to different paging indications may be the same or different.

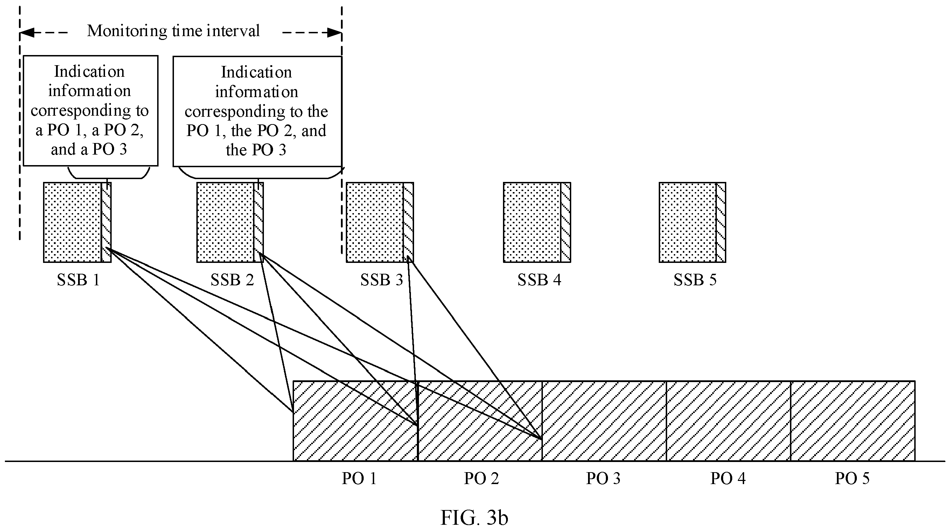

FIG. 3b is used as an example. There are SSB 1 to SSB 5 before a PO 5, there are SSB 1 to SSB 4 before a PO 4, there are SSB 1 to SSB 3 before a PO 3, there are SSB 1 to SSB 3 before a PO 2, there are SSB 1 and SSB 2 before a PO 1. The PO of the terminal is the PO 2, a monitoring time interval corresponding to the PO 2 of the terminal is one time interval from a start point of the SSB 1 to an end point of a paging indication nearby the SSB 2, and paging indications nearby the SSB 2 and the SSB 1 are within the monitoring time interval. Further, based on a setting principle that the paging indication corresponding to the PO is located nearby the SSB before the PO, it may be learned that a paging indication corresponding to the PO 3 may be a paging indication nearby the SSB 3, the SSB 2, and the SSB 1, a paging indication corresponding to the PO 2 may be a paging indication nearby the SSB 3, the SSB 2, and the SSB 1, and a paging indication corresponding to the PO 1 may be a paging indication nearby the SSB 2 and the SSB 1. In the monitoring time interval, the paging indication nearby the SSB 2 may correspond to the PO 1, the PO 2, and the PO 3, and the paging indication nearby the SSB 1 may correspond to the PO 1, the PO 2, and the PO 3. Therefore, it is determined, based on a time domain location relationship between the PO 3, the PO 2, and the PO 1 and an ordering rule corresponding to indication information, that indication information corresponding to the PO 2 is second indication information in the first field.

Manner 3: A quantity of paging occasions correspondingly indicated by one paging indication is configured as R, and quantities of paging occasions indicated by different paging indications are the same, that is, R paging occasions.

For example, the R paging occasions correspondingly indicated by the paging indication may be R consecutive paging occasions after the paging occasion, and the first paging occasion in the R paging occasions may be a paging occasion that is after the paging indication and that is closest to the paging indication. A value of R may be configured by the access network device for the terminal, or may be pre-specified in a protocol. This is not limited.

According to Manner 3, after a paging indication is set nearby an SSB, the terminal may learn that the paging indication corresponds to which R POs and R POs corresponding to which paging indication include a PO of the terminal, determine, based on the R POs corresponding to the paging indication and an ordering rule of indication information in the first field, indication information corresponding to the PO of the terminal, determine, based on the indication information corresponding to the PO of the terminal, whether there is paging on the PO of the terminal, and stop working as early as possible when there is no paging, to reduce energy consumption.

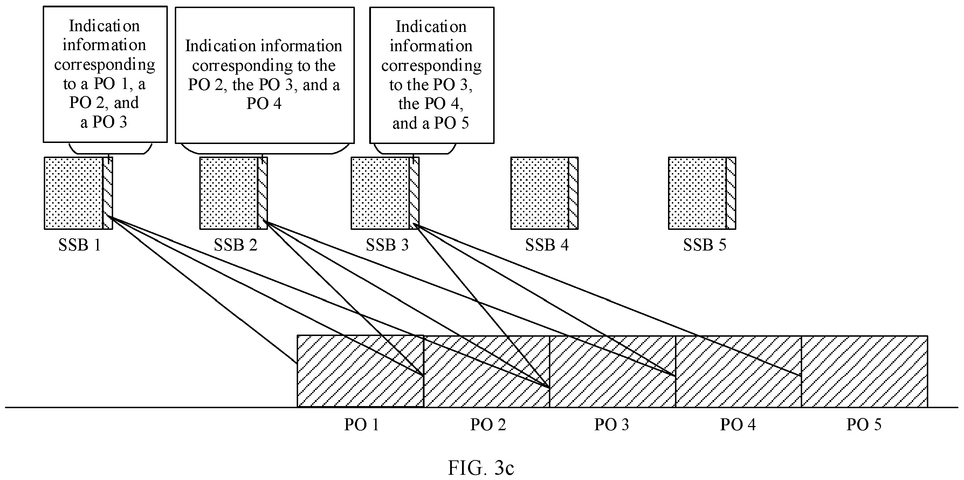

FIG. 3c is used as an example. It is assumed that R=3, and paging indications are separately set nearby SSB 1 to the SSB 5. Three POs corresponding to a paging indication nearby the SSB 1 are PO 1 to PO 3, three POs corresponding to a paging indication nearby the SSB 2 are PO 2 to PO 4, and three POs corresponding to a paging indication nearby the SSB 3 are PO 3 to PO 5. If the PO of the terminal is the PO 2, the terminal may determine that the paging indication that corresponds to the PO 2 and that is located in the SSB 1 further indicates the PO 1 and the PO 3, and then determine, based on a time domain location relationship between the PO 3, the PO 2, and the PO 1 and an ordering rule corresponding to indication information, that indication information corresponding to the PO 2 is second indication information in the first field.

It can be learned from the foregoing content that, if the paging occasion is grouped, for example, divided into M MOs, M bits included in the indication information corresponding to the paging occasion may be fixed or may be dynamically adjusted. When it is ensured that a false alarm probability of the terminal is low, to avoid wasting signaling overheads, all bits in a paging indication with a fixed length are occupied as much as possible, that is, all the bits are filled with available information. Specifically, the manner is shown in the following example 1 or example 2.

Example 1: If there is another field that indicates valid information and that is in the paging indication other than the first field, $M=\lfloor (A-B)/R \rfloor$. If a field that indicates valid information and that is in the paging indication is only the first field, a value of M is $\lfloor A/R \rfloor$.

A is a length of the paging indication, and B is a length of a field that indicates the valid information and that is in the paging indication other than the first field, for example, may be a total length of the second field, the third field, the fourth field, and the fifth field.

According to the manner shown in Example 1, a quantity of bits of padding in the paging indication may be as small as possible, a quantity of bits of the valid information may be as large as possible, and a quantity M of paging occasions to be further grouped may be as large as possible, to reduce a false alarm probability of paging the terminal, and increase a probability of successfully paging the terminal.

Example 2: Indication information corresponding to $(A-B)-\lfloor (A-B)/\mathrm{R} \rfloor \cdot R$ of the R paging occasions includes $\lceil (A-B)/\mathrm{R} \rceil$ bits, and indication information corresponding to each of remaining paging occasions of the R paging occasions includes $\lfloor (A-B)/\mathrm{R} \rfloor$ bits.

A is a length of the paging indication, and B is a length of a field that indicates valid information and that is in the paging indication other than the first field, for example, may be a total length of the second field, the third field, the fourth field, and the fifth field. It should be noted that, if a field that indicates the valid information in the paging indication is only the first field, a value of B in the formula shown in Example 2 is 0.

In Example 2, the indication information corresponding to the $(A-B)-\lfloor (A-B)/\mathrm{R} \rfloor \cdot R$ paging occasions may be some indication information at a front location, may be some indication information at a rear location, or may be some indication information at a preset location in the first field. This is not limited. For example, 10 bits are used to indicate four POs. According to the manner shown in Example 2, quantities of bits included in four pieces of indication information corresponding to the four POs may be obtained: {3, 3, 2, 2} or {2, 2, 3, 3}.

According to the manner shown in Example 2, existence of a padding bit can be completely avoided, a quantity of bits of the valid information is as large as possible, and a quantity M of paging occasions to be further grouped is as large as possible, to reduce a false alarm probability of paging the terminal, and increase a probability of successfully paging the terminal.

Further, to help the terminal accurately receive the paging indication nearby the SSB, there is a quasi-co-located (quasi-co-located, QCL) relationship between the paging indication and a synchronization signal block SSB closest to the paging indication, or a QCL relationship between the paging indication and an SSB associated with the paging indication. In other words, the terminal device may assume that there is the quasi-co-located relationship between the paging indication and the synchronization signal block SSB closest to the paging indication. When the paging indication is DCI, the QCL relationship between the paging indication and the SSB may be equivalently described as that there is a QCL relationship between a CORESET associated with a search space in which the paging indication is located and an associated (or a closest) SSB.

The QCL relationship actually represents a beam receive parameter used by the terminal to receive a signal. When two downlink signals are QCL signals, the terminal may receive the two signals by using a same receive beam. For example, if there is the QCL relationship between the paging indication and the synchronization signal block SSB closest to the paging indication, the terminal may receive the paging indication by using a receive beam the same as a receive beam used to receive the SSB. If there is the QCL relationship between the paging indication and the SSB associated with the paging indication, the terminal may receive the paging indication by using a receive beam the same as a receive beam used to receive the SSB associated with the paging indication.

Further, when one paging occasion may be indicated by a plurality of paging indications, indication information that is received by a terminal and that corresponds to the paging occasion may be inconsistent. As a result, the terminal cannot achieve an objective of saving energy by using the paging indication. For example, the terminal is a terminal with poor coverage, and needs to receive an SSB 1 and an SSB 2 for presynchronization. If content indicated by paging indications nearby the SSB 1 and the SSB 2 is consistent, after the terminal is indicated that the terminal cannot be paged by receiving the paging indication nearby the SSB 1, the terminal may enter a sleep state to save energy. If content indicated by paging indications nearby the SSB 1 and the SSB 2 is inconsistent, the terminal further needs to receive the paging indication nearby the SSB 2 to ensure security. In this case, no energy saving gain can be obtained.

To avoid the foregoing problem, in embodiments of this application, it should be further specified that indication content of first fields in different paging indications for a same paging occasion is the same, so that content of indication information in all paging indications for a same paging occasion is the same.

The following describes a process in which a network device pages a terminal by using an example in which a paging indication is of the foregoing design.

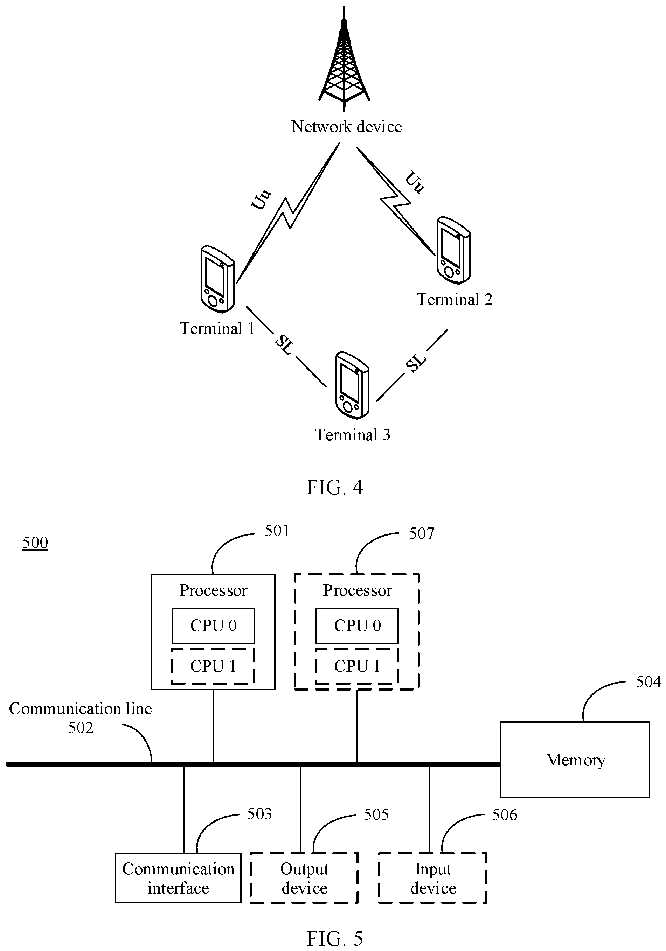

A paging method provided in an embodiment of this application may be applied to any one of a 4th generation (4th generation, 4G) system, a long term evolution (long term evolution, LTE) system, a 5th generation (5th generation, 5G) system, a new radio (new radio, NR) system, an NR-vehicle-to-everything (vehicle-to-everything, V2X) system, an internet of things system, or another next-generation communication system. This is not limited. The following describes the paging method provided in this embodiment of this application by using a communication system shown in FIG. 4 as an example.

FIG. 4 is a schematic diagram of the communication system according to an embodiment of this application. As shown in FIG. 4, the communication system may include a network device and a plurality of terminals, such as a terminal 1, a terminal 2, and a terminal 3. In the system shown in FIG. 4, data may be transmitted between the terminal and the network device through a Uu interface. For example, the network device may send downlink data to the terminal through the Uu interface, and the terminal may send uplink data to the network device through the Uu interface. Data may be transmitted between terminals through an SL. As described above, both the network device and the terminal in FIG. 4 may be referred to as a communication apparatus. It should be noted that FIG. 4 is an example of a framework diagram. A quantity of nodes included in FIG. 4 is not limited. In addition to functional nodes shown in FIG. 4, another node may be further included, for example, a core network device, a gateway device, or an application server. This is not limited.

The network device is mainly configured to implement functions such as resource scheduling, radio resource management, and radio access control of the terminal. Specifically, the network device may be any node of a small base station, a wireless access point, a transmission reception point (transmission reception point, TRP), a transmission point (transmission point, TP), and another access node. In this embodiment of this application, an apparatus configured to implement a function of the network device may be a network device, or may be an apparatus that can support the network device in implementing the function, for example, a chip system (for example, a processing system including one chip or a plurality of chips) or a modem (modem). The following describes the paging method provided in this embodiment of this application by using an example in which the apparatus configured to implement the function of the network device is a network device.

The terminal may be terminal equipment (terminal equipment), user equipment (user equipment, UE), a mobile station (mobile station, MS), a mobile terminal (mobile terminal, MT), or the like. Specifically, the terminal may be a mobile phone (mobile phone), a tablet computer, or a computer with a wireless transceiver function, or may be a virtual reality (virtual reality, VR) terminal, an augmented reality (augmented reality, AR) terminal, a wireless terminal in industrial control, a wireless terminal in self driving, a wireless terminal in telemedicine, a wireless terminal in a smart grid, a wireless terminal in a smart city (smart city), a smart home, a vehicle-mounted terminal, or the like. In this embodiment of this application, an apparatus configured to implement a function of the terminal may be a terminal, or may be an apparatus that can support the terminal in implementing the function, for example, a chip system (for example, a processing system including one chip or a plurality of chips) or a modem. The following describes the paging method provided in this embodiment of this application by using an example in which the apparatus configured to implement the function of the terminal is a terminal.

During specific implementation, the network elements shown in FIG. 4, for example, the terminals and the network device, may use a composition structure shown in FIG. 5 or include components shown in FIG. 5. FIG. 5 is a schematic composition diagram of a communication apparatus 500 according to an embodiment of this application. When the communication apparatus 500 has the function of the terminal in this embodiment of this application, the communication apparatus 500 may be a terminal, or a chip or a system-on-a-chip in a terminal.

As shown in FIG. 5, the communication apparatus 500 may include a processor 501, a communication line 502, and a communication interface 503. Further, the communication apparatus 500 may further include a memory 504. The processor 501, the memory 504, and the communication interface 503 may be connected to each other through the communication line 502.

The processor 501 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 501 may alternatively be another apparatus having a processing function, for example, a circuit, a component, or a software module.

The communication line 502 is configured to transmit information between the components included in the communication apparatus 500.

The communication interface 503 is configured to communicate with another device or another communication network. The another communication network may be an Ethernet, a radio access network (radio access network, RAN), a wireless local area network (wireless local area network, WLAN), or the like. The communication interface 503 may be a radio frequency module, a transceiver, or any apparatus that can implement communication. In this embodiment of this application, an example in which the communication interface 503 is a radio frequency module is used for description. The radio frequency module may include an antenna, a radio frequency circuit, and the like. The radio frequency circuit may include an integrated radio frequency chip, a power amplifier, and the like.

The memory 504 is configured to store instructions. The instructions may be a computer program.

The memory 504 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage, or a magnetic disk storage medium or another magnetic storage device. The optical disc storage includes a compact disc, a laser disc, an optical disc, a digital versatile disc, a Blu-ray disc, and the like.

It should be noted that the memory 504 may be independent of the processor 501, or may be integrated with the processor 501. The memory 504 may be configured to store instructions, program code, some data, or the like. The memory 504 may be located inside the communication apparatus 500, or may be located outside the communication apparatus 500. This is not limited. The processor 501 is configured to execute the instructions stored in the memory 504, to implement a paging method provided in the following embodiment of this application.

In an example, the processor 501 may include one or more CPUs, for example, a CPU 0 and a CPU 1 in FIG. 5.

In an optional implementation, the communication apparatus 500 includes a plurality of processors. For example, in addition to the processor 501 in FIG. 5, the communication apparatus 500 may further include a processor 507.

In an optional implementation, the communication apparatus 500 further includes an output device 505 and an input device 506. The input device 506 is a keyboard, a mouse, a microphone, a joystick, or the like, and the output device 505 is a device, for example, a display or a speaker (speaker).

It should be noted that the communication apparatus 500 may be a desktop computer, a laptop computer, a network server, a mobile phone, a tablet computer, a wireless terminal, an embedded device, a chip system, or a device having a structure similar to that shown in FIG. 5. In addition, the composition structure shown in FIG. 5 does not constitute a limitation on the communication apparatus. In addition to the components shown in FIG. 5, the communication apparatus may include more or fewer components than those shown in the figure, some components may be combined, or there may be a different component layout.

In this embodiment of this application, the chip system may include a chip, or may include a chip and another discrete component.

With reference to the communication system shown in FIG. 4, the following describes a process in which a network device pages a first terminal by using an example in which a paging indication is a PO. In the following embodiments, each device may have the component shown in FIG. 5, and actions, terms, and the like involved in the embodiments may be mutually referenced. Names of messages exchanged between devices, names of parameters in messages, and the like in the embodiments are merely examples. During specific implementation, another name may also be used. This is not limited. For example, "include" in this application may be replaced with "contain" or "carry". The paging indication described in this application may be replaced with a WUS, an early paging indication, or the like.

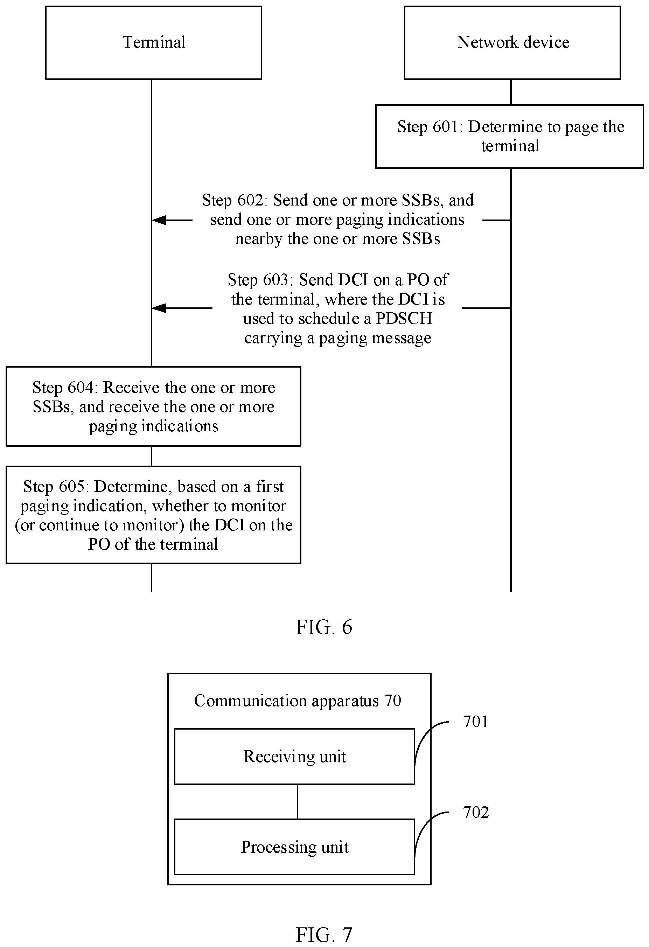

FIG. 6 shows a paging method according to an embodiment of this application. As shown in FIG. 6, the method may include the following steps.

Step 601: The network device determines to page a terminal.

The network device may be the network device in FIG. 4. The terminal may include one or more terminals in an idle state or an inactive state in FIG. 4, for example, may include the first terminal, a second terminal, a third terminal, and the like. These terminals may correspond to a same PO or different POs. This is not limited. This embodiment is described by using an example in which these terminals correspond to a same PO.

For example, when the terminal has a downlink service requirement, the network device determines to page the terminal, and triggers the terminal to switch from an idle state or an inactive state to a connected state, and the terminal receives a downlink service in the connected state.

Step 602: The network device cyclically sends one or more SSBs before a PO of the terminal, and sends one or more paging indications nearby the one or more SSBs.

The PO of the terminal may be a time interval in which the terminal monitors DCI that schedules a PDSCH carrying a paging message. For example, the network device may determine a PF of the terminal and the PO of the terminal according to the foregoing formula (1) and the foregoing formula (2). Details are not described again.

The SSB may be used by the terminal to perform presynchronization. Related descriptions of the SSB are described above, and details are not described again.

The paging indication may be used to indicate whether there is paging on one or more POs including the PO of the terminal. For example, the paging indication may indicate whether there is paging on R POs, where R is an integer greater than or equal to 1. For a quantity of pieces of indication information included in the paging indication and a quantity of bits included in each piece of indication information, refer to the foregoing description. For example, one piece of indication information may include one bit or may include M bits, and quantities of bits included in all pieces of indication information are the same or different. Details are not described again.

The SSBs nearby which the paging indications are sent may be located in a same SSB cycle, or may be located in different SSB cycles. This is not limited. In addition, in this application, for ease of description, the SSB nearby which the paging indication is sent may be referred to as an SSB associated with/corresponding to the paging indication, an SSB closest to the paging indication, or the like. This is not limited. For example, the paging indication corresponds to the SSB. One SSB may be corresponding to one paging indication, that is, one paging indication may be sent nearby one SSB. For a location relationship between the SSB and the paging indication nearby the SSB, refer to the foregoing description. Details are not described again.

Specifically, for a design form of each paging indication, refer to the description in FIG. 2. For a mapping relationship between the paging indication and the PO, for example, a manner of determining a quantity of POs specifically indicated by one paging indication, a quantity of POs specifically corresponding to one PO, or the like, refer to Manner 1, Manner 2, or Manner 3. For example, one paging indication may indicate R POs, one PO may correspond to K paging indications, or one PO corresponds to a paging indication in one monitoring time interval. Details are not described.

Further, to avoid that the terminal cannot achieve an objective of saving energy due to inconsistent indication information corresponding to a same PO, if the PO of the terminal corresponds to a plurality of paging indications, indication information that is used to indicate the PO of the terminal and that is in the plurality of paging indications is the same, to resolve inconsistency of the indication information corresponding to the same PO, and ensure that the terminal is ready to obtain the indication information, and enters a sleep state in advance when the terminal is indicated not to be paged, to save energy.

Further, to improve accuracy of sending the paging indication by the network device and help the terminal accurately receive the paging indication, there is a QCL relationship between a PO and an SSB corresponding to the PO or there is a QCL relationship between a PO and an SSB associated with the PO. The network device may send the paging indication to the terminal based on a transmit beam of the SSB. Correspondingly, the terminal receives the paging indication based on a receive beam of the SSB, to improve accuracy of receiving the paging indication by the terminal.

Step 603: The network device sends the DCI on the PO of the terminal, where the DCI is used to schedule the PDSCH carrying the paging message.

For related descriptions of the DCI and the PDSCH, refer to the foregoing descriptions. Details are not described again.

The paging message may include identification information of a plurality of terminals (such as the first terminal and the second terminal) that need to be paged, and POs of the terminals that need to be paged are the same. In this way, the plurality of terminals can be paged in one paging process, to reduce signaling overheads and energy consumption caused by interaction between the network device and the terminals.

Step 604: The terminal receives the one or more SSBs, and receives the one or more paging indications.

For example, the terminal may determine, based on a related configuration of the SSB, a coverage status of the terminal, and/or a hardware processing capability of the terminal, SSBs that need to be received, further determine, based on Manner 1, Manner 2, or Manner 3, SSBs nearby which the paging indication corresponding to the PO of the terminal is located and that are in the SSBs that need to be received, and receive one or more SSBs and one or more paging indications based on a determining result.

It should be noted that an execution sequence of Step 603 and Step 604 is not limited in this application. Step 603 and step 604 may be simultaneously performed, or as shown in FIG. 6, Step 603 is performed before Step 604, or Step 604 is performed before Step 603. This is not limited. In addition, it should be noted that in this application, for the network device and the terminal, "a design form of the paging indication (for example, fields included in the paging indication, and a quantity of bits included in each piece of indication information in the paging indication)" and "a manner of determining a quantity of POs specifically indicated by one paging indication and a quantity of POs specifically corresponding to one PO" are consistent. A design form and a determining manner to be used may be predetermined by the network device and the terminal in advance. Alternatively, the network device determines a design form and a determining manner to be selected, and indicates a selection result to the terminal. This is not limited.

Step 605: The terminal determines, based on a first paging indication, whether to monitor (or continue to monitor) the DCI on the PO of the terminal.

The first paging indication may be the first paging indication in one or more paging indications corresponding to the PO of the terminal, or may be any one of one or more paging indications corresponding to the PO of the terminal, or the like. This is not limited.

For example, that the terminal determines, based on a first paging indication, whether to monitor (or continue to monitor) the DCI on the PO of the terminal may include: The terminal determines, based on a time domain location of the PO of the terminal in the R POs, indication information corresponding to the PO of the terminal, and determines, based on the indication information corresponding to the PO of the terminal, whether to monitor the DCI on the PO of the terminal. For example, if the indication information corresponding to the PO of the terminal is used to indicate that there is paging on the PO of the terminal, it is determined to monitor the DCI on the PO of the terminal. If the indication information corresponding to the PO of the terminal is used to indicate that there is no paging on the PO of the terminal, it is determined not to monitor the DCI on the PO of the terminal, and the terminal stops working and enters a sleep state, to reduce energy consumption.

As described above, R pieces of indication information corresponding to the R POs may be arranged in the paging indication based on a sequence of time domain locations of the R POs. For example, indication information corresponding to a PO whose time domain location is earlier is arranged in the front of the paging indication, and indication information corresponding to a PO whose time domain location is later is arranged in the rear of the paging indication. Alternatively, indication information corresponding to a PO whose time domain location is earlier is arranged in the rear of the paging indication, and indication information corresponding to a PO whose time domain location is later is arranged in the front of the paging indication. That the terminal determines, based on a time domain location of the PO of the terminal in the R POs, indication information corresponding to the PO of the terminal may include: The terminal determines, based on an ordering rule of the R pieces of indication information, the indication information corresponding to the PO of the terminal.

Further, if the terminal determines, based on the first paging indication, to monitor the DCI on the PO of the terminal, the terminal continues to be in a working state after receiving the first paging indication, completes presynchronization, monitors the DCI on the PO of the terminal after the presynchronization, receives, at a resource location indicated by the DCI, the PDSCH carrying the paging message, determines, based on identification information of a terminal carried in the paging message, whether the terminal is paged, initiates a random access process if the terminal is paged, and transmits service data with network devices after random access succeeds.

Based on the method shown in FIG. 6, the network device may preset a paging indication before a PO, and indicate, to the terminal in advance by using the paging indication, whether there is paging on the PO, so that when there is no paging on the PO, the terminal is triggered to stop working in advance and enter a sleep state, to reduce energy consumption of the terminal. In addition, in the method shown in FIG. 6, one paging indication may be set to indicate whether there is paging on a plurality of POs, to indicate whether there is paging on the plurality of POs at a time, so as to reduce signaling overheads.

The foregoing mainly describes the solutions provided in embodiments of this application from a perspective of interaction between the nodes. It may be understood that, to implement the foregoing functions, the nodes such as a terminal include corresponding hardware structures and/or software modules for performing the functions. A person skilled in the art should easily be aware that, in combination with algorithm steps of the examples described in embodiments disclosed in this specification, this application may be implemented by hardware or a combination of hardware and computer software. Whether a function is implemented by hardware or hardware driven by computer software depends on particular applications and design constraints of the technical solutions. A person skilled in the art may use different methods to implement the described function for each particular application, but it should not be considered that the implementation goes beyond the scope of this application.

In embodiments of this application, the terminal and the like may be divided into function modules based on the foregoing method examples. For example, each function module may be obtained through division based on each corresponding function, or two or more functions may be integrated into one processing module. The foregoing integrated module may be implemented in a form of hardware, or may be implemented in a form of a software function module. It should be noted that, in embodiments of this application, module division is an example, and is merely a logical function division. In actual implementation, another division manner may be used.

FIG. 7 is a structural diagram of a communication apparatus 70. The communication apparatus 70 may be a first communication apparatus, or a chip or a system-on-a-chip in a first communication apparatus. The communication apparatus 70 may be configured to implement a function of the first communication apparatus in the foregoing embodiment. In an implementation, the communication apparatus 70 shown in FIG. 7 includes a receiving unit 701 and a processing unit 702.

The receiving unit 701 is configured to receive, before a paging occasion of a terminal, a first paging indication that includes a first field and that is sent by a network device. The first field is used to indicate whether paging is sent on R paging occasions that include the paging occasion of the terminal. For example, the receiving unit 701 may support the communication apparatus 70 in performing Step 604.

The processing unit 702 is configured to determine, based on a first paging occasion, whether to monitor, on the paging occasion of the terminal, DCI that is used to schedule a paging message. For example, the processing unit 702 may support the communication apparatus 70 in performing Step 605.

Specifically, all related content of the steps in the foregoing method embodiment shown in FIG. 6 may be referenced to function descriptions of corresponding function modules, and details are not described herein again. The communication apparatus 70 is configured to implement the function of the terminal in the paging method shown in the method shown in FIG. 6, and therefore can achieve the same effect as the foregoing paging method.

In another implementation, the communication apparatus 70 shown in FIG. 7 includes a processing module and a communication module. The processing module is configured to control and manage an action of the communication apparatus 70. For example, the processing module may integrate a function of the processing unit 702, and may be configured to support the communication apparatus 70 in performing Step 605 and another process of the technology described in this specification. The communication module may integrate a function of the receiving unit 701, and may be configured to support the communication apparatus 70 in performing Step 604 and communicating with another network entity, for example, communicating with a function module or a network entity shown in FIG. 4. The communication apparatus 70 may further include a storage module, to store program code and data of the communication apparatus 70.

The processing module may be a processor or a controller. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The communication module may be a transceiver circuit, a communication interface, or the like. The storage module may be a memory. When the processing module is the processor, the communication module is the communication interface, and the storage module is the memory, the communication apparatus 70 in this embodiment of this application may be the communication apparatus 500 shown in FIG. 5.

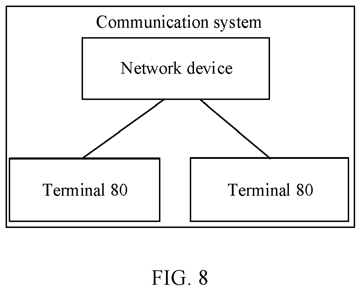

FIG. 8 is a structural diagram of a communication system according to an embodiment of this application. As shown in FIG. 8, the communication system may include terminals 80 and a network device. A function of the terminal 80 is the same as the function of the communication apparatus 70.

For example, the terminal 80 is configured to: receive, before a paging occasion of the terminal 80, a first paging indication that includes a first field and that is sent by a network device, where the first field is used to indicate whether paging is sent on R paging occasions that include the paging occasion of the terminal 80; and determine, based on a first paging occasion, whether to monitor, on the paging occasion of the terminal 80, DCI that is used to schedule a paging message.

For a design manner of the paging occasion, a mapping relationship between the paging indication and the paging occasion, and a specific execution action of the terminal, refer to related descriptions and design manners in the method shown in FIG. 6. Details are not described again.

An embodiment of this application further provides a computer-readable storage medium. All or some of the processes in the foregoing method embodiments may be implemented by a computer program instructing related hardware. The program may be stored in the computer-readable storage medium. When the program is run, the processes of the foregoing method embodiments can be implemented. The computer-readable storage medium may be an internal storage unit of the terminal (which includes a data transmit end and/or a data receive end) in any one of the foregoing embodiments, for example, a hard disk or a memory of the terminal. The computer-readable storage medium may alternatively be an external storage device of the terminal, for example, a plug-in hard disk, a smart media card (smart media card, SMC), a secure digital (secure digital, SD) card, or a flash card (flash card) provided on the terminal. Further, the computer-readable storage medium may alternatively include both the internal storage unit and the external storage device of the terminal. The computer-readable storage medium is configured to store the computer program and another program and data that are required by the terminal. The computer-readable storage medium may be further configured to temporarily store data that has been output or is to be output.

With reference to the foregoing descriptions, this application further provides the following embodiments.

Embodiment 1: A paging method, where the method includes:

a terminal receives, before a paging occasion of the terminal, a first paging indication sent by a network device, where the first paging indication includes a first field, the first field is used to indicate whether paging is sent on R paging occasions, the R paging occasions include the paging occasion of the terminal, and R is an integer greater than or equal to 1; and

the terminal determines, based on a first paging occasion, whether to monitor downlink control information DCI on the paging occasion of the terminal, where the DCI is used to schedule a paging message.

Embodiment 2: The method according to Embodiment 1, where
the first field includes R pieces of indication information, an $i^{th}$ piece of indication information of the R pieces of indication information indicates whether paging is sent on an $i^{th}$ paging occasion of the R paging occasions, and i is an integer greater than or equal to 1 and less than or equal to R.

Embodiment 3: The method according to Embodiment 2, where that the terminal determines, based on a first paging occasion, whether to monitor downlink control information DCI on the paging occasion of the terminal includes:

the terminal determines, based on a time domain location of the paging occasion of the terminal in the R paging occasions, indication information corresponding to the paging occasion of the terminal; and

the terminal determines, based on the indication information corresponding to the paging occasion of the terminal, whether to monitor the DCI on the paging occasion of the terminal.

Embodiment 4: The method according to any one of Embodiment 1 to Embodiment 3, where that a terminal receives, before a paging occasion of the terminal, a first paging indication sent by a network device includes:

the terminal determines, based on the time domain location of the paging occasion of the terminal, K paging indications corresponding to the paging occasion of the terminal, where K is an integer greater than or equal to 1; and

the terminal receives the K paging indications before the paging occasion, and determines the first paging indication from the K paging indications.

Embodiment 5: The method according to Embodiment 4, where
K is configured by the network device for the terminal.
Embodiment 6: The method according to any one of Embodiment 1 to Embodiment 3, where that a terminal receives, before a paging occasion of the terminal, a first paging indication sent by a network device includes:
the terminal receives, in a monitoring time interval, the first paging indication sent by the network device.
Embodiment 7: The method according to Embodiment 6, where

the terminal receives monitoring time window configuration information sent by the network device, where the monitoring time window configuration information is used to determine the monitoring time interval; and
the terminal determines the monitoring time interval based on the monitoring time window configuration information.

Embodiment 8: The method according to any one of Embodiment 1 to Embodiment 3, where the R paging occasions are R paging occasions that are after the first paging indication and that are closest to the first paging indication.
Embodiment 9: The method according to Embodiment 8, where
R is configured by the network device for the terminal.
Embodiment 10: The method according to any one of Embodiment 1 to Embodiment 9, where the first field includes indication information corresponding to each of the R paging occasions, the indication information corresponding to each of the R paging occasions includes M quantities of bits, the M quantities of bits are used to indicate whether there is paging on a paging occasion corresponding to the indication information, and M is an integer greater than or equal to 1.
Embodiment 11: The method according to Embodiment 10, where

M is configured by the network device for the terminal; or
M meets a formula: $M = \lfloor (A-B)/R \rfloor$ , where A is a length of a paging indication, and B is a length of a field that is in the paging indication other than the first field and that indicates valid information.

Embodiment 12: The method according to any one of Embodiment 1 to Embodiment 9, where the first field includes indication information corresponding to each of the R paging occasions; and

indication information corresponding to $(A-B) - \lfloor (A-B)/R \rfloor \cdot R$ of the R paging occasions includes $\lceil (A-B)/R \rceil$ bits, and indication information corresponding to each of remaining paging occasions of the R paging occasions includes $\lfloor (A-B)/R \rfloor$ bits, where A is a length of a paging indication, and B is a length of a field that is in the paging indication other than the first field and that indicates valid information.
Embodiment 13: The method according to any one of Embodiment 1 to Embodiment 12, where the paging indication further includes one or more of the following fields: a second field embodiment, a third field embodiment, and a fourth field;

the second field is used to indicate whether the paging indication includes a short message SM;
the third field is used to indicate an SM; and
the fourth field is used to indicate availability of an auxiliary reference signal, and the auxiliary reference signal is an auxiliary reference signal configured by the network device or an auxiliary reference signal associated with the R paging occasions.

Embodiment 14: The method according to Embodiment 13, where the second field is common information of the R paging occasions.
Embodiment 15: The method according to Embodiment 13, where the SM indicates one or more of the following information: system information change indication information embodiment, earthquake and tsunami warning information embodiment, commercial mobile alert information embodiment, and indication information indicating to stop monitoring a paging message.
Embodiment 16: The method according to any one of Embodiment 13 to Embodiment 15, where a length of the third field is configured by the network device.

Embodiment 17: The method according to any one of Embodiment 13 to Embodiment 16, where the third field is common information of the R paging occasions.

Embodiment 18: The method according to any one of Embodiment 13 to Embodiment 17, where that the fourth field is used to indicate availability of an auxiliary reference signal includes:

a length of the fourth field is equal to a quantity of auxiliary reference signals or auxiliary reference signal groups configured by the network device, where the auxiliary reference signal group includes one or more auxiliary reference signals; or

a length of the fourth field is equal to a quantity of auxiliary reference signals or auxiliary reference signal groups associated with the R paging occasions; or

the fourth field includes R subfields, the R subfields correspond to the R paging occasions, and one subfield is used to indicate availability of an auxiliary reference signal associated with a paging occasion corresponding to the subfield.

Embodiment 19: The method according to any one of Embodiment 1 to Embodiment 7, where the first paging indication further includes a fifth field; and the fifth field is used to indicate a quantity of paging occasions indicated by the first field; or

the fifth field is used to indicate a length of the first field.

Embodiment 20: The method according to any one of Embodiment 1 to Embodiment 19, where content indicated by first fields in different paging indications for a same paging occasion is the same.

Embodiment 21: The method according to any one of Embodiment 1 to Embodiment 20, where

there is a quasi-co-located QCL relationship between the first paging indication and a synchronization signal block SSB closest to the first paging indication; or

there is a QCL relationship between the first paging indication and an SSB associated with the first paging indication.

Embodiment 22: A communication apparatus, where the communication apparatus includes:

a terminal receives, before a paging occasion of the terminal, a first paging indication sent by a network device, where the first paging indication includes a first field, the first field is used to indicate whether paging is sent on R paging occasions, the R paging occasions include the paging occasion of the terminal, and R is an integer greater than or equal to 1; and

the terminal determines, based on a first paging occasion, whether to monitor downlink control information DCI on the paging occasion of the terminal, where the DCI is used to schedule a paging message.

Embodiment 23: The communication apparatus according to Embodiment 22, where the first field includes R pieces of indication information, an $i^{th}$ piece of indication information of the R pieces of indication information indicates whether paging is sent on an $i^{th}$ paging occasion of the R paging occasions, and i is an integer greater than or equal to 1 and less than or equal to R.

Embodiment 24: The communication apparatus according to Embodiment 24, where that the terminal determines, based on a first paging occasion, whether to monitor downlink control information DCI on the paging occasion of the terminal includes:

the terminal determines, based on a time domain location of the paging occasion of the terminal in the R paging occasions, indication information corresponding to the paging occasion of the terminal; and

the terminal determines, based on the indication information corresponding to the paging occasion of the terminal, whether to monitor the DCI on the paging occasion of the terminal.

Embodiment 25: The communication apparatus according to any one of Embodiment 22 to Embodiment 24, where that a terminal receives, before a paging occasion of the terminal, a first paging indication sent by a network device includes:

the terminal determines, based on the time domain location of the paging occasion of the terminal, K paging indications corresponding to the paging occasion of the terminal, where K is an integer greater than or equal to 1; and

the terminal receives the K paging indications before the paging occasion, and determines the first paging indication from the K paging indications.

Embodiment 26: The communication apparatus according to Embodiment 25, where K is configured by the network device for the terminal.

Embodiment 27: The communication apparatus according to any one of Embodiment 22 to Embodiment 24, where that a terminal receives, before a paging occasion of the terminal, a first paging indication sent by a network device includes:
the terminal receives, in a monitoring time interval, the first paging indication sent by the network device.

Embodiment 28: The communication apparatus according to Embodiment 27, where

the terminal receives monitoring time window configuration information sent by the network device, where the monitoring time window configuration information is used to determine the monitoring time interval; and
the terminal determines the monitoring time interval based on the monitoring time window configuration information.

Embodiment 29: The communication apparatus according to any one of Embodiment 22 to Embodiment 24, where the R paging occasions are R paging occasions that are after the first paging indication and that are closest to the first paging indication.

Embodiment 30: The communication apparatus according to Embodiment 29, where R is configured by the network device for the terminal.

Embodiment 31: The communication apparatus according to any one of Embodiment 22 to Embodiment 30, where the first field includes indication information corresponding to each of the R paging occasions, the indication information corresponding to each of the R paging occasions includes M quantities of bits, the M quantities of bits are used to indicate whether there is paging on a paging occasion corresponding to the indication information, and M is an integer greater than or equal to 1.

Embodiment 32: The communication apparatus according to Embodiment 31, where

M is configured by the network device for the terminal; or

M meets a formula: $M=\lfloor (A-B)/R \rfloor$ , where A is a length of a paging indication, and B is a length of a field that is in the paging indication other than the first field and that indicates valid information.

Embodiment 33: The communication apparatus according to any one of Embodiment 22 to Embodiment 30, where the first field includes indication information corresponding to each of the R paging occasions; and

indication information corresponding to $(A-B)-\lfloor (A-B)/R \rfloor \cdot R$ of the R paging occasions includes

$\lceil (A-B)/R \rceil$ bits, and indication information corresponding to each of remaining paging occasions of the R paging occasions includes $\lfloor (A-B)/R \rfloor$ bits, where A is a length of a paging indication, and B is a length of a field that is in the paging indication other than the first field and that indicates valid information.

Embodiment 34: The communication apparatus according to any one of Embodiment 22 to Embodiment 33, where the paging indication further includes one or more of the following fields: a second field embodiment, a third field embodiment, and a fourth field;

the second field is used to indicate whether the paging indication includes a short message SM;
the third field is used to indicate an SM; and
the fourth field is used to indicate availability of an auxiliary reference signal, and the auxiliary reference signal is an auxiliary reference signal configured by the network device or an auxiliary reference signal associated with the R paging occasions.

Embodiment 35: The communication apparatus according to Embodiment 34, where the second field is common information of the R paging occasions.

Embodiment 36: The communication apparatus according to Embodiment 34, where the SM indicates one or more of the following information: system information change indication information embodiment, earthquake and tsunami warning information embodiment, commercial mobile alert information embodiment, and indication information indicating to stop monitoring a paging message.

Embodiment 37: The communication apparatus according to any one of Embodiment 24 to Embodiment 36, where a length of the third field is configured by the network device.

Embodiment 38: The communication apparatus according to any one of Embodiment 34 to Embodiment 37, where the third field is common information of the R paging occasions.

Embodiment 39: The communication apparatus according to any one of Embodiment 24 to Embodiment 38, where that the fourth field is used to indicate availability of an auxiliary reference signal includes:

a length of the fourth field is equal to a quantity of auxiliary reference signals or auxiliary reference signal groups configured by the network device, where the auxiliary reference signal group includes one or more auxiliary reference signals; or
a length of the fourth field is equal to a quantity of auxiliary reference signals or auxiliary reference signal groups associated with the R paging occasions; or
the fourth field includes R subfields, the R subfields correspond to the R paging occasions, and one subfield is used to indicate availability of an auxiliary reference signal associated with a paging occasion corresponding to the subfield.

Embodiment 40: The communication apparatus according to any one of Embodiment 22 to Embodiment 28, where the first paging indication further includes a fifth field; and the fifth field is used to indicate a quantity of paging occasions indicated by the first field; or

the fifth field is used to indicate a length of the first field.

Embodiment 41: The communication apparatus according to any one of Embodiment 22 to Embodiment 40, where

content indicated by first fields in different paging indications for a same paging occasion is the same.

Embodiment 42: The communication apparatus according to any one of Embodiment 22 to Embodiment 41, where

there is a quasi-co-located QCL relationship between the first paging indication and a synchronization signal block SSB closest to the first paging indication; or
there is a QCL relationship between the first paging indication and an SSB associated with the first paging indication.

Embodiment 43: A communication system, where the communication system includes:

a terminal, configured to receive, before a paging occasion of the terminal, a first paging indication sent by a network device, where the first paging indication includes a first field, the first field is used to indicate whether paging is sent on R paging occasions, the R paging occasions include the paging occasion of the terminal, and R is an integer greater than or equal to 1; and
the terminal determines, based on a first paging occasion, whether to monitor downlink control information DCI on the paging occasion of the terminal, where the DCI is used to schedule a paging message.

Embodiment 44: A communication apparatus, where the communication apparatus includes one or more processors and a communication interface, and the one or more processors and the communication interface are configured to support the communication apparatus in performing the paging method according to any one of Embodiments 1 to 21.

Embodiment 45: A computer-readable storage medium, where the computer-readable storage medium includes computer instructions, and when the computer instructions are run on a computer, the computer is enabled to perform the paging method according to any one of Embodiments 1 to 21.

It should be noted that, in the specification, claims, and accompanying drawings of this application, the terms such as "first" and "second" are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

It should be understood that in embodiments of this application, "B corresponding to A" indicates that B is associated with A. For example, B may be determined based on A. It should be further understood that determining B based on A does not mean that B is determined based only on A. B may alternatively be determined based on A and/or other information. In addition, in embodiments of this application, "connection" means various connection manners such as a direct connection or an indirect connection, for implementing communication between devices. This is not limited in embodiments of this application.

In embodiments of this application, unless otherwise specified, "transmission" (transmit/transmission) refers to bidirectional transmission, and includes a sending action and/or a receiving action. Specifically, "transmission" in embodiments of this application includes data sending, data receiving, or data sending and data receiving. In other words, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express a same concept, and a communication system is a communication network.

Based on the description of the foregoing implementations, it may be clearly understood by a person skilled in the art that, for ease and brevity of description, division of the foregoing function modules is merely used as an example for description. In actual application, the foregoing functions may be allocated to different function modules for implementation according to a requirement, that is, an internal structure of the apparatus is divided into different function modules, to implement all or some of the functions described above.

In the several embodiments provided in this application, it should be understood that the disclosed apparatus and method may be implemented in other manners. For example, the described apparatus embodiment is merely an example. For example, division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium, and includes a plurality of instructions for instructing a device (which may be a single-chip microcomputer, a chip, or the like) or a processor (processor) to perform all or some of the steps of the method in embodiments of this application. The foregoing storage medium includes any medium that can store program code, such as a USB flash drive, a removable hard disk, a ROM, a RAM, a magnetic disk, or an optical disc.

**Claims**

1. A paging method, wherein the method comprises:

   receiving, by a terminal before a paging occasion of the terminal, a first paging indication sent by a network device, wherein the first paging indication comprises a first field, the first field is used to indicate whether paging is sent on R paging occasions, the R paging occasions comprise the paging occasion of the terminal, and R is an integer greater than or equal to 1; and
   determining, by the terminal based on a first paging occasion, whether to monitor downlink control information DCI on the paging occasion of the terminal, wherein the DCI is used to schedule a paging message.

2. The method according to claim 1, wherein
   the first field comprises R pieces of indication information, an $i^{th}$ piece of indication information of the R pieces of indication information indicates whether paging is sent on an $i^{th}$ paging occasion of the R paging occasions, and i is an integer greater than or equal to 1 and less than or equal to R.

3. The method according to claim 2, wherein the determining, by the terminal based on a first paging occasion, whether to monitor downlink control information DCI on the paging occasion of the terminal comprises:

determining, by the terminal based on a time domain location of the paging occasion of the terminal in the R paging occasions, indication information corresponding to the paging occasion of the terminal; and

determining, by the terminal based on the indication information corresponding to the paging occasion of the terminal, whether to monitor the DCI on the paging occasion of the terminal.

4. The method according to any one of claims 1 to 3, wherein the receiving, by a terminal before a paging occasion of the terminal, a first paging indication sent by a network device comprises:

determining, by the terminal based on the time domain location of the paging occasion of the terminal, K paging indications corresponding to the paging occasion of the terminal, wherein K is an integer greater than or equal to 1; and

receiving, by the terminal, the K paging indications before the paging occasion, and determining the first paging indication from the K paging indications.

5. The method according to claim 4, wherein
K is configured by the network device for the terminal.

6. The method according to any one of claims 1 to 3, wherein the receiving, by a terminal before a paging occasion of the terminal, a first paging indication sent by a network device comprises:
receiving, by the terminal in a monitoring time interval, the first paging indication sent by the network device.

7. The method according to claim 6, wherein

receiving, by the terminal, monitoring time window configuration information sent by the network device, wherein the monitoring time window configuration information is used to determine the monitoring time interval; and

determining, by the terminal, the monitoring time interval based on the monitoring time window configuration information.

8. The method according to any one of claims 1 to 3, wherein the R paging occasions are R paging occasions that are after the first paging indication and that are closest to the first paging indication.

9. The method according to claim 8, wherein
R is configured by the network device for the terminal.

10. The method according to any one of claims 1 to 9, wherein the first field comprises indication information corresponding to each of the R paging occasions, the indication information corresponding to each of the R paging occasions comprises M quantities of bits, the M quantities of bits are used to indicate whether there is paging on a paging occasion corresponding to the indication information, and M is an integer greater than or equal to 1.

11. The method according to claim 10, wherein

M is configured by the network device for the terminal; or

M meets a formula: $M = \lfloor (A-B)/R \rfloor$, wherein A is a length of a paging indication, and B is a length of a field that is in the paging indication other than the first field and that indicates valid information.

12. The method according to any one of claims 1 to 9, wherein the first field comprises indication information corresponding to each of the R paging occasions; and

indication information corresponding to $(A-B) - \lfloor (A-B)/R \rfloor \cdot R$ of the R paging occasions comprises $\lceil (A-B)/R \rceil$ bits, and indication information corresponding to each of remaining paging occasions of the R paging occasions comprises $\lfloor (A-B)/R \rfloor$ bits, wherein A is a length of a paging indication, and B is a length of a field that is in the paging indication other than the first field and that indicates valid information.

13. The method according to any one of claims 1 to 12, wherein the paging indication further comprises one or more of the following fields: a second field, a third field, and a fourth field;

the second field is used to indicate whether the paging indication comprises a short message SM;
the third field is used to indicate an SM; and
the fourth field is used to indicate availability of an auxiliary reference signal, and the auxiliary reference signal is an auxiliary reference signal configured by the network device or an auxiliary reference signal associated with the R paging occasions.

**14.** The method according to claim 13, wherein the second field is common information of the R paging occasions.

**15.** The method according to claim 13, wherein the SM indicates one or more of the following information: system information change indication information, earthquake and tsunami warning information, commercial mobile alert information, and indication information indicating to stop monitoring a paging message.

**16.** The method according to any one of claims 13 to 15, wherein a length of the third field is configured by the network device.

**17.** The method according to any one of claims 13 to 16, wherein the third field is common information of the R paging occasions.

**18.** The method according to any one of claims 13 to 17, wherein that the fourth field is used to indicate availability of an auxiliary reference signal comprises:

a length of the fourth field is equal to a quantity of auxiliary reference signals or auxiliary reference signal groups configured by the network device, wherein the auxiliary reference signal group comprises one or more auxiliary reference signals; or
a length of the fourth field is equal to a quantity of auxiliary reference signals or auxiliary reference signal groups associated with the R paging occasions; or
the fourth field comprises R subfields, the R subfields correspond to the R paging occasions, and one subfield is used to indicate availability of an auxiliary reference signal associated with a paging occasion corresponding to the subfield.

**19.** The method according to any one of claims 1 to 7, wherein the first paging indication further comprises a fifth field; and the fifth field is used to indicate a quantity of paging occasions indicated by the first field; or the fifth field is used to indicate a length of the first field.

**20.** The method according to any one of claims 1 to 19, wherein content indicated by first fields in different paging indications for a same paging occasion is the same.

**21.** The method according to any one of claims 1 to 20, wherein

there is a quasi-co-located QCL relationship between the first paging indication and a synchronization signal block SSB closest to the first paging indication; or
there is a QCL relationship between the first paging indication and an SSB associated with the first paging indication.

**22.** A communication system, wherein the communication system comprises:

a terminal, configured to receive, before a paging occasion of the terminal, a first paging indication sent by a network device, wherein the first paging indication comprises a first field, the first field is used to indicate whether paging is sent on R paging occasions, the R paging occasions comprise the paging occasion of the terminal, and R is an integer greater than or equal to 1; and
the terminal determines, based on a first paging occasion, whether to monitor downlink control information DCI on the paging occasion of the terminal, wherein the DCI is used to schedule a paging message.

**23.** A communication apparatus, wherein the communication apparatus comprises one or more processors and a communication interface, and the one or more processors and the communication interface are configured to support the communication apparatus in performing the paging method according to any one of claims 1 to 21.

**24.** A computer-readable storage medium, wherein the computer-readable storage medium comprises computer instructions, and when the computer instructions are run on a computer, the computer is enabled to perform the paging method according to any one of claims 1 to 21.

PO 0 to PO 4    PO 0 to PO 4    PO 0 to PO 4    PO 0 to PO 4

One PF    One PF    One PF    One PF

DRX cycle T

FIG. 1a

SSB 1    SSB 2    PO 1

FIG. 1b

SSB 1    SSB 2    SSB 3    SSB 4    SSB 5

PO 1    PO 2    PO 3    PO 4    PO 5

FIG. 1c

SSB 1         SSB 2         PO 1

UE 1

UE 2

Presynchronization

FIG. 1d

Indicate that the UE 1 is not paged    Indicate that the UE 2 is not paged

SSB 1         SSB 2         PO 1

UE 1

UE 2

FIG. 1e

FIG. 1f

SSB 0 to
SSB 3

SSB 0 to
SSB 3

SSB 0 to
SSB 3

SSB 0 to
SSB 3

SSB 0 to
SSB 3

SSB
cycle 1

SSB
cycle 2

SSB
cycle 3

SSB
cycle 4

SSB
cycle 5

PO 1: MO 0
to MO 3

PO 2: MO 0
to MO 3

PO 3: MO 0
to MO 3

PO 4: MO 0
to MO 3

PO 5: MO 0
to MO 3

FIG. 1g

Second field   Third field          Fifth field          Fourth field          First field

| SMI | SM | Indicate a length of the first field | Indicate an RS | Indication information indicating whether paging is sent on N POs | Blank padding |

Shared by the N POs          Shared by the N POs

FIG. 2

FIG. 3a

FIG. 3b

| Indication information corresponding to a PO 1, a PO 2, and a PO 3 | Indication information corresponding to the PO 2, the PO 3, and a PO 4 | Indication information corresponding to the PO 3, the PO 4, and a PO 5 |

SSB 1     SSB 2     SSB 3     SSB 4     SSB 5

PO 1     PO 2     PO 3     PO 4     PO 5

FIG. 3c

Network device

Uu

Uu

Terminal 1

Terminal 2

SL

SL

Terminal 3

FIG. 4

500

501

507

Processor

Processor

CPU 0

CPU 0

CPU 1

CPU 1

504

Communication line
502

Memory

503

505

506

Communication
interface

Output
device

Input
device

FIG. 5

| Terminal | | Network device |
|----------|--|----------------|

Step 601: Determine to page the terminal

Step 602: Send one or more SSBs, and send one or more paging indications nearby the one or more SSBs

Step 603: Send DCI on a PO of the terminal, where the DCI is used to schedule a PDSCH carrying a paging message

Step 604: Receive the one or more SSBs, and receive the one or more paging indications

Step 605: Determine, based on a first paging indication, whether to monitor (or continue to monitor) the DCI on the PO of the terminal

FIG. 6

Communication apparatus 70

Receiving unit     701

Processing unit     702

FIG. 7

Communication system

Network device

Terminal 80

Terminal 80

FIG. 8

| | INTERNATIONAL SEARCH REPORT | International application No. |
|---|---|---|
| | | **PCT/CN2021/110090** |

**A.    CLASSIFICATION OF SUBJECT MATTER**

H04W 52/02(2009.01)i

According to International Patent Classification (IPC) or to both national classification and IPC

**B.    FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 寻呼时机, 寻呼指示, 是否, PO, paging occasion, paging indication, indicate, instruct, whether

**C.    DOCUMENTS CONSIDERED TO BE RELEVANT**

| Category* | Citation of document, with indication, where appropriate, of the relevant passages | Relevant to claim No. |
|---|---|---|
| PX | CN 112118615 A (HUAWEI TECHNOLOGIES CO., LTD.) 22 December 2020 (2020-12-22) description paragraphs [0005]-[0317] | 1, 2, 8-10, 13, 22-24 |
| X | CN 111357332 A (BEIJING XIAOMI MOBILE SOFTWARE CO., LTD.) 30 June 2020 (2020-06-30) description, paragraphs [0003]-[0174] | 1-24 |
| X | CN 111356216 A (HUAWEI TECHNOLOGIES CO., LTD.) 30 June 2020 (2020-06-30) description paragraphs [0005]-[0195] | 1-24 |
| X | US 2020221416 A1 (SONY CORP.) 09 July 2020 (2020-07-09) description paragraphs [0009]-[0151] | 1-24 |
| A | CN 106465330 A (HUAWEI TECHNOLOGIES CO., LTD.) 22 February 2017 (2017-02-22) entire document | 1-24 |
| A | WO 2019101858 A1 (NOKIA TECHNOLOGIES OY) 31 May 2019 (2019-05-31) entire document | 1-24 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 September 2021** | **20 October 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/110090**

| Patent document cited in search report | | | Publication date (day/month/year) | Patent family member(s) | | | Publication date (day/month/year) |
|---|---|---|---|---|---|---|---|
| CN | 112118615 | A | 22 December 2020 | WO | 2020253581 | A1 | 24 December 2020 |
| CN | 111357332 | A | 30 June 2020 | WO | 2021159394 | A1 | 19 August 2021 |
| CN | 111356216 | A | 30 June 2020 | WO | 2020135019 | A1 | 02 July 2020 |
| US | 2020221416 | A1 | 09 July 2020 | WO | 2019063479 | A1 | 04 April 2019 |
| | | | | US | 11102755 | B2 | 24 August 2021 |
| | | | | EP | 3666003 | A1 | 17 June 2020 |
| CN | 106465330 | A | 22 February 2017 | WO | 2016149940 | A1 | 29 September 2016 |
| WO | 2019101858 | A1 | 31 May 2019 | | None | | |

Form PCT/ISA/210 (patent family annex) (January 2015)

**EP 4 181 582 A1**

**REFERENCES CITED IN THE DESCRIPTION**

**Patent documents cited in the description**

- CN 202010761727

- CN 202010791001